# EUROPEAN PATENT APPLICATION

(11) **EP 4 770 040 A1**
(43) Date of publication of application: **01.07.2026**
(21) Application number: 23959907.9
(22) Date of filing: 30.11.2023
(51) Int. Cl.: H04L 47/12, H04W 28/10

(54) **DATA TRANSMISSION NEGOTIATION METHOD AND APPARATUS, AND DEVICE AND STORAGE MEDIUM**

(71) Applicant: GUANGDONG OPPO MOBILE TELECOMMUNICATIONS CORP., LTD., Dongguan, Guangdong 523860 (CN)
(72) Inventor: LU, Liuming, Dongguan, Guangdong 523860 (CN); LUO, Chaoming, Dongguan, Guangdong 523860 (CN)
(74) Representative: Taor, Simon Edward William
(86) International application number: PCT/CN2023/135692
(87) International publication number: WO 2025/111996

(57) **Abstract**

The present application belongs to the technical field of communications. Disclosed are a data transmission negotiation method and apparatus, and a device and a storage medium. The method comprises: transmitting at least one frame, wherein the frame is used for negotiating whether to use out-of-order transmission. Negotiation is performed in advance concerning out-of-order transmission, and how to use the out-of-order transmission is specified, thereby ensuring that data transmission can be performed between a first device and another communication device on the basis of a definite transmission mechanism.

## Description

### TECHNICAL FIELD

Embodiments of the present disclosure relate to the technical field of communication, and particularly relate to a negotiation method for data transmission, a negotiation apparatus for data transmission, a device, and a storage medium.

### BACKGROUND

During communication transmission, the restriction of sending data in order leads to a problem of head of line blocking. The problem of head of line blocking means that the data sender needs to sequentially send data packets according to an order of serial numbers; when a certain data packet fails to be sent, the sending of other data packets following the data packet may be affected, causing that the data packets with low-time latency sending requirements cannot be transmitted quickly. As such, the transmission of the data packets fails to meet the corresponding service quality requirements.

In the related technologies, by introducing an out-of-order transmission processing mechanism, the problem of head of line blocking can be solved. However, the relevant data sender and data receiver have not yet made clear how to negotiate whether the out-of-order transmission processing mechanism is used.

### SUMMARY

The embodiments of the present disclosure provide a negotiation method for data transmission, a negotiation apparatus for data transmission, a device, and a storage medium. The technical solutions are as follows:

According to an aspect of the embodiments of the present disclosure, there is provided a negotiation method for data transmission. The method includes the following operation.

At least one frame is transmitted, where the least one frame is used for negotiating whether the out-of-order transmission is used.

According to another aspect of the embodiments of the present disclosure, there is provided a negotiation apparatus for data transmission. The apparatus include a transmission module.

The transmission module is configured to transmit at least one frame, where the least one frame is used for negotiating whether the out-of-order transmission is used.

According to another aspect of the embodiments of the present disclosure, there is provided a communication device, which includes:
a processor;
a transceiver coupled to the processor;
a memory for storing executable instructions of the processor.

Herein, the processor is configured to load and execute the executable instructions to implement the negotiation method for data transmission according to the aforementioned various aspects.

According to another aspect of the embodiments of the present disclosure, there is provided a computer-readable storage medium. The computer-readable storage medium has stored a computer program thereon, and the computer program is loaded and executed by a processor to implement the negotiation method for data transmission according to the aforementioned various aspects.

According to another aspect of the embodiments of the present disclosure, there is provided a computer program product or a computer program. The computer instructions are stored in the computer-readable storage medium, and a processor acquires the computer instructions from the computer-readable storage medium, and the processor is enabled to load and execute to implement the negotiation method for data transmission according to the aforementioned various aspects.

The technical solutions provided by the embodiments of the present disclosure may include the following beneficial effects

By transmitting the at least one frame for negotiating whether the out-of-order transmission is used, the first device can perform the negotiation for the out-of-order transmission in advance through the frame for negotiating whether the out-of-order transmission is used during data transmission with other communication devices, which can specify how to use the out-of-order transmission by transmitting the frame for negotiating whether the out-of-order transmission is used before the data transmission. Thereby, it can ensure that the data transmission between the first device and other communication devices can be performed based on a clear transmission mechanism.

### BRIEF DESCRIPTION OF THE DRAWINGS

FIG. 1 shows a schematic diagram of out-of-order transmission according to the related technologies.
FIG. 2 shows a schematic diagram of out-of-order transmission according to the related technologies.
FIG. 3 shows a schematic diagram of a communication system according to an embodiment of the present disclosure.
FIG. 4 shows a flowchart of a negotiation method for data transmission according to an embodiment of the present disclosure.
FIG. 5 shows a flowchart of a negotiation method for data transmission according to an embodiment of the present disclosure.
FIG. 6 shows a schematic diagram of a field according to an embodiment of the present disclosure.
FIG. 7 shows a schematic diagram of a field according to an embodiment of the present disclosure.
FIG. 8 shows a schematic diagram of a field according to an embodiment of the present disclosure.
FIG. 9 shows a schematic diagram of a field according to an embodiment of the present disclosure.
FIG. 10 shows a schematic diagram of a field according to an embodiment of the present disclosure.
FIG. 11 shows a flowchart of a negotiation method for data transmission according to an embodiment of the present disclosure.
FIG. 12 shows a flowchart of a negotiation method for data transmission according to an embodiment of the present disclosure.
FIG. 13 shows a flowchart of a negotiation method for data transmission according to an embodiment of the present disclosure.
FIG. 14 shows a flowchart of a negotiation method for data transmission according to an embodiment of the present disclosure.
FIG. 15 shows a flowchart of a negotiation method for data transmission according to an embodiment of the present disclosure.
FIG. 16 shows a flowchart of a negotiation method for data transmission according to an embodiment of the present disclosure.
FIG. 17 shows a flowchart of a negotiation method for data transmission according to an embodiment of the present disclosure.
FIG. 18 shows a flowchart of a negotiation method for data transmission according to an embodiment of the present disclosure.
FIG. 19 shows a flowchart of a negotiation method for data transmission according to an embodiment of the present disclosure.
FIG. 20 shows a flowchart of a negotiation method for data transmission according to an embodiment of the present disclosure.
FIG. 21 shows a structural block diagram of a negotiation apparatus for data transmission according to an embodiment of the present disclosure.
FIG. 22 shows a structural block diagram of a negotiation apparatus for data transmission according to an embodiment of the present disclosure.
FIG. 23 shows a schematic structural diagram of a communication device according to an embodiment of the present disclosure.

### DETAILED DESCRIPTION

To make the technical objectives, technical solutions, and advantages of the present disclosure more clear, the implementations of the present disclosure are described in further detail below with reference to the accompanying drawings. Herein, the exemplary embodiments, examples of which are shown in the accompanying drawings, are described in detail. When the description below refers to the drawings, the same numerals in different drawings represent the same or similar elements unless otherwise indicated. The implementations described in the following exemplary embodiments do not represent all implementations that are consistent with the present disclosure. Rather, such implementations are merely examples of devices and methods that are consistent with some aspects of the present disclosure as detailed in the appended claims. Regarding to the embodiments in the present disclosure, all other embodiments obtained by those skilled in the art without creative effort fall within the scope of protection of the present disclosure.

The terminology used in the present disclosure is merely for the purpose of describing specific embodiments and is not intended to limit the present disclosure. The singular forms of "a", "said" and "the" used in the present disclosure and the appended claims are also intended to include the plurality of forms unless the context clearly indicates otherwise. It should also be understood that the term "and/or" used herein refers to and includes any or all possible combinations of one or more associated listed objects. It should be understood that although the terms of first, second, third, etc. may be used in the present disclosure to describe various pieces of information, such information should not be limited to these terms. These terms are only used to distinguish information of the same type from each other. For example, without departing from the scope of the present disclosure, the first information may also be referred to as the second information; and similarly, the second information may also be referred to as the first information. Depending on the context, the expression "if" used herein may be interpreted as "in a case where......", "when......" or "in response to determining ......".

Firstly, the related technologies related to the embodiments of the present disclosure are introduced.

### • In-order transmission mechanism:

A Media Access Control (MAC) data service of Wireless Fidelity (Wi-Fi) is provided with a peer Logical Link Control (LLC) sublayer entity or an IEEE 802.1Q bridge port and with the capability to exchange a MAC Service Data Unit (MSDU). To support such service, the local MAC uses an underlying physical layer service to transmit the MSDU to a peer MAC entity, at which the MSDU is delivered to the peer LLC sublayer or bridge port. Such asynchronous MSDU transmission is performed on a connectionless basis. By default, the MSDU transmission is based on best effort. However, a Quality of Service (QoS) facility uses a Traffic Identifier (TID) to specify different services on a per-MSDU basis.

A Station (STA) maintains one or more serial number spaces that are used for determining a serial number of a frame upon transmission. When multiple serial number spaces are supported, the appropriate serial number space is determined by information from the MAC control fields of the frame to be transmitted. Each serial number space is represented by a modulus 4096, starting at 0 and incremented by 1, for each MSDU or A-MSDU or M-MPDU that is transmitted by using the serial number space.

A Multi-Link Device (MLD) maintains one or more serial number spaces that are used when an STA affiliated with the MLD sends an individually addressed QoS data frame to an STA affiliated with the associated MLD to determine the serial number of the frame. The serial number space may include a single counter or multiple counters.

MAC Protocol Data Units (MPDUs) belonging to the same MSDU or A-MSDU shall have the same serial number. Different MSDUs, A-MSDUs or M-MPDUs have different serial numbers.

### • Robust Security Network Association (RSNA) confidentiality and integrity protocol:

The Wi-Fi standard defines the following RSNA data confidentiality and integrity protocols: Counter Mode (CTR) with Cipher-block Chaining Message Authentication Code (CBC-MAC) protocol (CTR with CBC-MAC protocol, CCMP), and Galois/Counter Mode protocol (GCMP).

The CCMP provides data confidentiality, authentication, integrity, and replay protection. The CCMP is a Counter with CBC-MAC (CCM) based on an Advanced Encryption Standard (AES) encryption algorithm. The CCM combines the CTR for data confidentiality and the CBC-MAC for authentication and integrity. The CCM protects the integrity of the MPDU data field and the selected portion of the IEEE 802.11 MPDU header. The CCM is a general mode that can be used with any block-oriented encryption algorithm. The CCM requires a new temporary key for each session. The CCM also requires a unique nonce value for each frame protected by a given temporary key. Reusing the nonce value with the same temporary key may invalidate all security guarantees.

For a secure PV0 MPDU, the CCMP encrypts a frame body field of a plaintext MPDU and encapsulates the generated ciphertext. Herein, by increasing a Packet Number (PN), a new non-zero PN is obtained for each MPDU, so that for the same temporary key, the PN is not repeated.

The PN values are sequentially numbered for each MPDU. Each sender STA that is not affiliated to the MLD shall maintain a single PN for each Pairwise Transient Key Security Association (PTKSA) and Group Temporal Key Security Association (GTKSA). Each sender STA that is affiliated to the MLD shall use the PN maintained by the MLD for the PTKSA, or the PN maintained by the STA for the GTKSA. The PN shall be implemented as a 48-bit strictly incrementing integer that is initialized to 0 when the corresponding temporary key is initialized or refreshed.

For each MPDU, the PN value is incremented by a positive number. For the component MPDUs of a fragmented MSDU, A-MSDU, and MMPDU, the PN shall be incremented in a step of 1. For the PV0 MPDU, the PNs of a series of encrypted MPDUs using the same temporary key are not repeated. For a PV1 MPDU, the PNs of a series of encrypted MPDUs using the same temporary key and Partial TID (PTID) is required to never be repeated.

When the PN space is exhausted, i.e., the PN exceeds the thresholds defined by a PN exhaustion lowest threshold and a PN exhaustion highest threshold, the available option for implementation is to replace the corresponding key or terminate the communication. If an individually addressed MPDU is sent by the MLD to a receiving MLD through an affiliate STA, a single PN space shall be reserved for the PTKSA for transmission through all affiliate STAs.

The data receiver shall discard any received data frame whose PN is less than or equal to the value of the replay counter associated with an address of the sender or an address of the sending station (Transmitter Address or Transmitting Station Address (TA)), a Receiver Address or Receiving Station Address (RA) of the received MPDU and the priority value. If the MPDU is an individually addressed data frame transmitted through the affiliated STA between an Access Point (AP) MLD and a non-AP MLD associated with the AP MLD, the data receiver shall discard any received data frame whose PN is less than or equal to the values of the replay counter associated with the data sender MLD MAC address, the data receiver MLD MAC address, and the priority value of the receiving MPDU.

For the individually addressed MPDU received by the affiliated STA from the sending MLD, the receiving MLD shall maintain a set of replay counters for the PTKSA for all affiliated STAs.

### • Out-of-order transmission mechanism:

The IEEE 802.11-23/697r0 proposal refers to the problem of head of line blocking in WiFi, and proposes to allow a MAC Service Access Point (MAC-SAP) to optionally deliver out-of-order data packets for specific TID(s). Herein, the number of the specific TID(s) may be limited to 1 or 2; and the specific TID(s) may be limited to be used in flow establishment which can benefit from the out-of-order packet delivery. At the same time, the PN space used by the frame that requires out-of-order transmission and the PN space used by the frame that requires in-order transmission are distinguished.

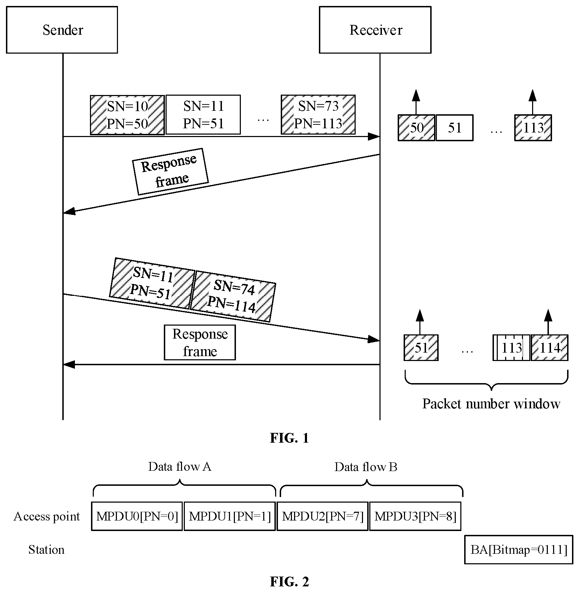

Exemplarily, the out-of-order delivery is shown in FIG. 1. Although the data receiver cannot successfully receive an MPDU with a Serial Number (SN) of 11 and a PN of 51 at the beginning, it still delivers the received MPDU (such as a PN of 50 or 113) to the next MAC process first, that is, for replay detection. After receiving the MPDU with the PN of 51, the received MPDU with the PN of 51 is then delivered to the next MAC process along with the subsequently received MPDU.

Herein, the SN is used for sequentially numbering each data packet, and assisting in reordering in case of out-of-order, packet loss, timeout, etc. occurred during the transmission process. Exemplarily, as shown in FIG. 1, the data packets with SN = 10, SN = 11... are sequentially transmitted. When the out-of-order, packet loss, timeout, etc. occurred during the transmission process, the data receiver may be unable to accurately receive the data packets according to the arrangement order corresponding to the SN. For example, when the data packet with SN = 11 is not transmitted to the data receiver, the data receiver still continues to receive the data packets sent by the data sender, but is required to reorder the data packets in a case where the data packet with SN = 11 is received.

The PN is also used for numbering the data packets. Such numbering is used as decoding information corresponding to each data packet, and can also assist in the replay detection in case of out-of-order, packet loss, timeout, etc. occurred during the transmission process. The rule for the replay detection may include at least one of the following.
- The PN value is continuously calculated for each MPDU.
- Each data sender is required to maintain a PN value for each PTKSA, GTKSA, and Station Key Security Association (STAkeySA).
- The PN sequence is a 48-bit monotonically increasing positive integer, which is initialized to be 1 when the corresponding temporary key is initialized or refreshed.
- The data receiver is required to maintain a separate set of PN replay counters for each PTKSA, GTKSA, and STAKeySA. The data receiver resets the replay counter to be 0 when resetting the temporary key. The replay counter is set to be the PN value of the receivable CCMP MPDU.
- The data receiver maintains an independent replay counter for IEEE 802.11 MSDU priority for each PTKSA, GTKSA, and STAKeySA, and obtains the PN value from the received data frame to check the replayed data frame. The IEEE 802.11 MSDU priority is not used at this time. The data sender also does not reorder the frame within the replay counter, but may reorder the data frame outside the replay counter.
- If the PN value of the MPDU is discontinuous, the entire MSDU at which the MPDU is located is discarded by the data receiver. The data receiver also discards any MPDU whose PN value is less than or equal to the value of the replay counter, while increasing the value of the replay count of the CCMP.

The IEEE 802.11-23/0799r0 proposal introduces an independent PN sequence and replay counter for low-time latency data packets, to facilitate earlier processing of the low-time latency data packets while continuing to support replay detection for other data packets in the same TID. As shown in FIG. 2, the data flow A and data flow B sent by the access point to the station use different PN sequences, and the data flow A and data flow B use different replay counters. For example, the data flow A uses a PN sequence of {0, 1, 2, 3, 4, 5, 6}, and the data flow B uses a PN sequence of {7, 8, 9, 10, 11, 12, 13}. According to the bitmap {0, 1, 1, 1} corresponding to a response message replied by the station, it is known that the MPDU0 has not been successfully received. However, since the MPDU0 belongs to the data flow A and the MPDU2 and MPDU3 belong to the data flow B, even if the MPDU0 is not successfully received, the station can still deliver the MPDU2 and MPDU3 to the upper layer.

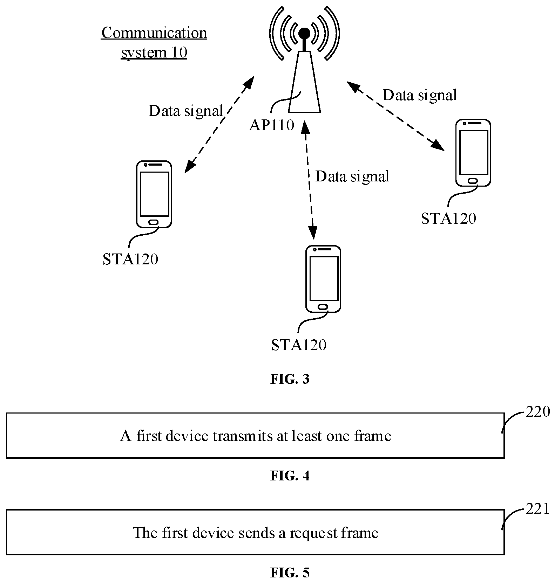

FIG. 3 is a schematic diagram of a communication system 10 according to an exemplary embodiment of the present disclosure. The communication system 10 includes terminals; the communication system 10 includes a terminal and a network device; or, the communication system 10 includes an AP and an STA, which is not limited in the present disclosure. In the present disclosure, the communication system 10 including an AP 110 and an STA 120 is taken as an example for illustration.

In some scenarios, the AP may also be referred to as an AP STA, that is, the AP is also a kind of STA in a sense. In some scenarios, the STA may also be referred to as a non-AP STA. In some embodiments, the STA may include an AP STA and a non-AP STA.

The communication in the communication system may be a communication between an AP and a non-AP STA, a communication between a non-AP STA and a non-AP STA, or a communication between an STA and a peer STA. Here, the peer STA may refer to a device that communicates with a peer of the STA, for example, the peer STA may be an AP or a non-AP STA. Exemplarily, there are two communication scenarios between the STA and the AP: an uplink communication scenario and a downlink communication scenario. Herein, the uplink communication means that the STA sends a signal to the AP; and the downlink communication means that the AP sends a signal to the STA.

The AP acts as a bridge connecting the wired network and the wireless network. Its main function is to connect various wireless network clients together, and then connect the wireless network to Ethernet. The AP device may be a terminal device (such as a mobile phone) with a Wi-Fi chip or a network device (such as a router). It should be understood that the role of the STA in the communication system is not absolute. For example, in some scenarios, when the mobile phone is connected to the router, the mobile phone is a non-AP STA, and when the mobile phone serves as a hotspot for other mobile phones, the mobile phone acts as an AP. The AP and non-AP STA may be devices applied in the Internet of Vehicles, Internet of Things (IoT) nodes, sensors, etc. in the IoTs, smart cameras, smart remote controllers, smart water meters, etc. in smart homes, and sensors in smart cities, etc.

In some embodiments, the non-AP STA may support, but is not limited to, the 802.11bf standard. The non-AP STA may support various current and future Wireless Local Area Network (WLAN) standards of the 802.11 family, such as 802.11ax, 802.11ac, 802.11n, 802.11g, 802.11b, and 802.11a.

In some embodiments, the AP may be a device that supports the 802.11bf standard. The AP may be a device supporting various current and future 802.11 family WLAN standards such as 802.11ax, 802.11ac, 802.11n, 802.11g, 802.11b, and 802.11a.

In an embodiment of the present disclosure, the STA may be the following device supporting WLAN/Wi-Fi technology: a mobile phone, a tablet computer, a computer, a Virtual Reality (VR) device, an Augmented Reality (AR) device, a communication device in industrial control, a set-top box, a communication device in unmanned driving, a communication device in vehicle, a communication device in telemedicine, a communication device in smart grid, a communication device in transportation security, a communication device in smart city or a communication device in smart home, a wireless communication chip, or the like. The WLAN technology may support frequency bands including but not limited to: low frequency band (2.4 GHz, 5 GHz, 6 GHz), high frequency band (60 GHz).

There are one or more links between the station and the access point, and in some embodiments, the station and the access point support multi-band communication, for example, communication simultaneously on the 2.4 GHz, 5 GHz, 6 GHz, and 60 GHz frequency bands, or communication simultaneously on different channels in the same frequency band (or different frequency bands), improving communication throughput and/or reliability between devices. Such devices are typically referred to as multi-band devices, may also be referred to as Multi-Link Devices (MLDs), and are sometimes also referred to as multi-link entities or multi-band entities. The multi-link device may be an access point device or a station device. If the multi-link device is an access point device, one or more APs are included in the multi-link device; and if the multi-link device is a station device, one or more non-AP STAs are included in the multi-link device. The multi-link device including one or more APs may also be referred to as the AP; and the multi-link device including one or more Non-AP STAs may also be referred to as the Non-AP. In an embodiment of the present disclosure, the Non-AP may be referred to as the STA.

In an embodiment of the present disclosure, the AP may include multiple APs, the Non-AP may include multiple STAs, and multiple links may be formed between the multiple APs in such AP and the multiple STAs in such Non-AP. Data communication may be performed through the corresponding link between the AP in such AP and the corresponding STA in such Non-AP. The AP is a device deployed in a wireless local area network for providing wireless communication functions to the STA, and the STA may include a User Equipment (UE), an access terminal, a user unit, a user station, a mobile station, a mobile site, a remote station, a remote terminal, a mobile device, a wireless communication device, a user agent, or a user apparatus. Optionally, the STA may also be a cellular telephone, a cordless telephone, a Session Initiation Protocol (SIP) telephone, a Wireless Local Loop (WLL) station, a personal digital assistant (PDA), a handheld device having a wireless communication function, a computing device or other processing device connected to a wireless modem, a vehicle-mounted device, or a wearable device, which is not limited in the embodiments of the present disclosure.

In the embodiments of the present disclosure, the STA and the AP both support the Institute of Electrical and Electronics Engineers (IEEE) 802.11 standard, but are not limited to the IEEE 802.11 standard.

In some embodiments, in order to solve the problem of head of line blocking that may occur during in-order (in-sequence) transmission, the related technologies introduce an out-of-order transmission mechanism. However, the related technologies only proposes that the problem of head of line blocking that may occur during the in-order transmission can be solved by adding the out-of-order transmission mechanism in addition to the in-order transmission mechanism, but fails to specify how to use the out-of-order transmission between the data sender and the data receiver.

In view of the above problems, the embodiments of the present disclosure provide a negotiation method for data transmission, and further provide a negotiation scheme for an out-of-order transmission mechanism. FIG. 4 shows a flowchart of a negotiation method for data transmission according to an exemplary embodiment of the present disclosure. The method is performed by a first device, where the first device is a multi-link device that serves as an access point, or the first device is a multi-link device that serves as a non-access point. In an embodiment of the present disclosure, the first device is a data sender. The method includes the following operation 220.

At block 220, the first device transmits at least one frame.

In some embodiments, the first device is the AP or the STA in the aforementioned communication system. Optionally, in the embodiments of the present disclosure, the first device as a sender device that requests to negotiate whether out-of-order transmission is used as an example for illustration.

The first device transmits at least one frame, and the at least one frame is used for negotiating whether the out-of-order transmission is used. In the embodiments, the term "transmission" may be considered to be the sending and/or receiving operation.

Optionally, the frame includes at least one of the following:
- a request frame;
- a response frame; or,
- a demolition frame.

In some embodiments, the first device transmits at least one request frame, and the request frame is used for requesting to negotiate whether the out-of-order transmission is used.

In some embodiments, the first device transmits at least one response frame, and the response frame is used for responding to whether the out-of-order transmission is used.

In some embodiments, the first device transmits at least one demolition frame, and the demolition frame is used for demolishing a data transmission mode (such as an out-of-order transmission mode) used for the negotiated data unit.

In some embodiments, the first device transmits at least one request frame and at least one response frame.

In some embodiments, the first device transmits at least one request frame and at least one demolition frame.

In some embodiments, the first device transmits at least one response frame and at least one demolition frame.

In some embodiments, the first device transmits at least one request frame, at least one response frame, and at least one demolition frame.

In some embodiments, the at least one frame is further used for negotiating an out-of-order processing mode and an out-of-order processing parameter in a case where the out-of-order transmission is allowed. Optionally, the request frame is further used for requesting to negotiate the out-of-order processing mode and the out-of-order processing parameter in a case where the out-of-order transmission is allowed. Optionally, the response frame is further used for responding to whether the out-of-order processing mode and the out-of-order processing parameter are used in a case where the out-of-order transmission is allowed.

In some embodiments, the out-of-order processing mode and the out-of-order processing parameter include at least one of the following information:
- transmission direction;
- allowance of one of the out-of-order transmission and in-order transmission;
- whether the out-of-order transmission is allowed to be used for a data unit corresponding to at least one traffic identifier (TID);
- a serial number (SN) processing and reordering mode of a data unit corresponding to at least one TID;
- a packet number (PN) processing and replay detection mode of a data unit corresponding to at least one TID;
- the number of SN spaces and/or the number of first counters used for a data unit corresponding to at least one TID;
- the maximum number of SN spaces allowed to be used for a data unit corresponding to at least one TID;
- the maximum number of first counters allowed to be used for a data unit corresponding to at least one TID;
- whether the out-of-order transmission is allowed by a data unit corresponding to at least one TID that uses a SN space and/or a first counter;
- a condition parameter for delivering a data unit corresponding to at least one TID that is received to an upper layer;
- the allowable maximum deviation between a serial number of a data unit corresponding to at least one TID that is received and a serial number of a data unit corresponding to at least one TID that is unreceived;
- the longest waiting time of a data unit corresponding to at least one TID that is received in a buffer;
- the number of PN spaces and/or the number of second counters used for a data unit corresponding to at least one TID;
- the maximum number of PN spaces that are allowed to be used for a data unit corresponding to at least one TID;
- the maximum number of second counters that are allowed to be used for a data unit corresponding to at least one TID;
- whether a PN window is used for replay detection on a data unit corresponding to at least one TID; or
- a size of a PN window that is used for replay detection on a data unit corresponding to at least one TID.

Herein, the data unit corresponding to at least one TID includes the data unit corresponding to one TID and/or the data unit corresponding to each TID of at least two TIDs. Specifically, the above information is described in the following embodiments.

In summary, in the method provided by the embodiment, by transmitting the at least one frame for negotiating whether the out-of-order transmission is used, the first device can perform the negotiation for the out-of-order transmission in advance through the frame for negotiating whether the out-of-order transmission is used during data transmission with other communication devices, which can specify how to use the out-of-order transmission by transmitting the frame for negotiating whether the out-of-order transmission is used before the data transmission. Thereby, it can ensure that the data transmission between the first device and other communication devices can be performed based on a clear transmission mechanism.

For the request frame:
FIG. 5 shows a flowchart of a negotiation method for data transmission according to an exemplary embodiment of the present disclosure. The method is performed by the first device, and the aforementioned operation 220 includes the following sub operation 221.

At block 221, the first device sends a request frame.

In some embodiments, the request frame is used for requesting to negotiate whether the out-of-order transmission is used. Optionally, the request frame is used for requesting to negotiate that the out-of-order transmission is used. Optionally, the request frame is used for requesting to negotiate that the out-of-order transmission is not used. Optionally, the request frame is used for requesting to negotiate that the out-of-order transmission is used for a data unit corresponding to a TID with a value of m, where the value of m is an integer. Optionally, the request frame is used for requesting to negotiate that the out-of-order transmission is used for a data unit corresponding to a TID with a value of n, where the value of n is an integer.

In some embodiments, the request frame is further used for requesting to negotiate an out-of-order processing mode and an out-of-order processing parameter in a case where the out-of-order transmission is allowed.

In some embodiments, the request frame is an action frame. In some embodiments, the request frame includes at least one field. For example, the request frame includes a first action field, which is used for indicating the transaction requested by the request frame. Exemplarily, as shown in Table 1 below, the first action field includes at least one of the following: a category field, a protected action field, a dialog token field, or a data unit in-order/out-of-order transmission field.

**Table 1**

| Order | Information |
|---|---|
| 1 | Category |
| 2 | Protected Action |
| 3 | Dialog Token |
| 4 | Data unit in-order/out-of-order transmission |

Herein, the category field may be set to be a corresponding value shown in the "Code" column of the "Category" value in the IEEE 802.11 specification. An action frame of a given category is referred to as a < Category Name > action frame. For example, a frame of a protected Ultra High Reliability (UHR) category is referred to as a protected UHR action frame.

The category field is followed by the protected action field, which is the field used for distinguishing the protected action frame format. Here, the specific protected action frame format may be indicated by the corresponding protected action field value.

The dialog token field is typically set to be a non-zero value, which is selected by the station that sends the request frame, to identify the transaction requested by the request frame.

The data unit in-order/out-of-order transmission field includes at least one data transmission element. The data transmission element may also be referred to as a data unit in-order/out-of-order transmission element. Optionally, when the data unit in-order/out-of-order transmission field includes at least two data transmission elements, different data transmission elements are used to indicate data transmission in different transmission directions. Exemplarily, in a case where the data unit in-order/out-of-order transmission field includes two data transmission elements, one data transmission element is used for indicating data transmission in an uplink direction, and another data transmission element is used for indicating data transmission in a downlink direction.

In some embodiments, the request frame includes a first field.

Optionally, the first field is carried in the aforementioned data unit in-order/out-of-order transmission field. Optionally, the first field is carried in the data transmission element in the data unit in-order/out-of-order transmission field. The data transmission element is used for indicating whether the out-of-order transmission is allowed by all or part of the data units corresponding to the TID, as well as the out-of-order processing mode and the out-of-order processing parameter in a case where the out-of-order transmission is allowed by all or part of the data units corresponding to the TID.

In the embodiments of the present disclosure, the first field carried in the data transmission element in the aforementioned data unit in-order/out-of-order transmission field is taken as an example for illustration, and the format of the data transmission element is shown in Table 2 below.

**Table 2**

| | | | | | | |
|---|---|---|---|---|---|---|
| Element ID | Length | Element ID extension | Out-of-order transmission processing control | Out-of-order transmission processing of TID 0 (Optional) | ... | Out-of-order transmission processing of TID i (Optional) |

Herein, the Element ID field, the Length field, and the Element ID Extension field comply with definitions in the IEEE 802.11 specification.

It should be noted that the names of different fields in the embodiments of the present disclosure are merely examples of names, and specifically, the names of each field may be expressed in other ways, which is not limited in the embodiments of the present disclosure.

In some embodiments, the first field may also be referred to as the out-of-order transmission processing control field. The first field is used for requesting whether the out-of-order transmission is allowed by the data unit corresponding to at least one TID in at least one transmission direction, and/or, the out-of-order processing mode and the out-of-order processing parameter in a case where the out-of-order transmission is allowed.

Optionally, the first field is used for requesting that the out-of-order transmission is allowed by the data unit corresponding to at least one TID in at least one transmission direction.

Optionally, the first field is used for requesting that the out-of-order transmission is not allowed by the data unit corresponding to at least one TID in at least one transmission direction.

Optionally, the first field is used for requesting the out-of-order processing mode and the out-of-order processing parameter in a case where the out-of-order transmission is allowed by the data unit corresponding to at least one TID in at least one transmission direction.

Optionally, the first field is used for requesting that the out-of-order transmission is allowed by the data unit corresponding to at least one TID in at least one transmission direction, and further requesting the out-of-order processing mode and the out-of-order processing parameter in a case where the out-of-order transmission is allowed.

In some embodiments, the aforementioned first field includes at least one of the following:
- a first subfield;
- a second subfield;
- a third subfield; or
- a reserved subfield.

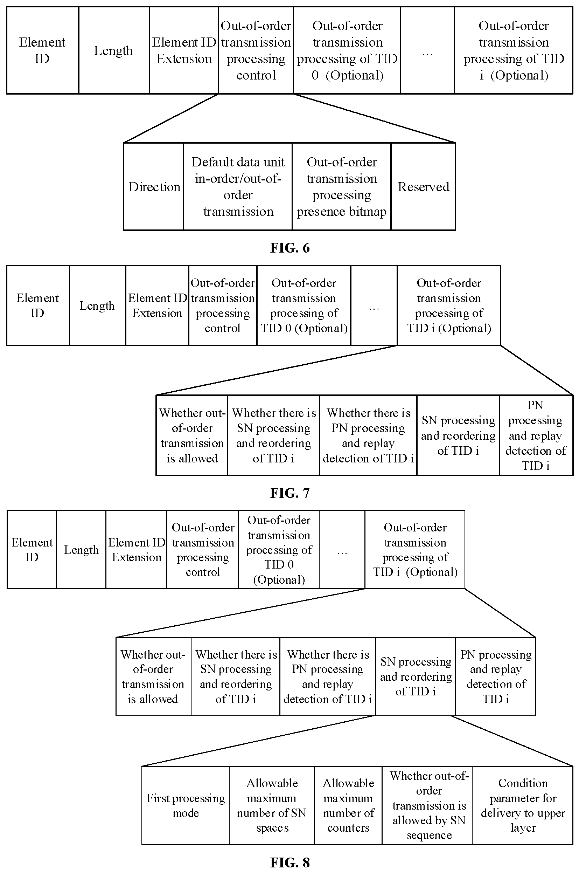

Exemplarily, as shown in FIG. 6, the out-of-order transmission processing control field (the first field) includes at least one of the following: a direction subfield (the first subfield); a default data unit in-order/out-of-order transmission subfield (the second subfield); an out-of-order transmission processing bitmap subfield (the third subfield); or the reserved subfield.

Herein, the out-of-order transmission processing bitmap subfield (the third subfield) is indicated based on the data unit in-order/out-of-order transmission subfield (the second subfield). In a case where the data unit in-order/out-of-order transmission subfield (the second subfield) indicates that the out-of-order transmission is allowed, the out-of-order transmission processing bitmap subfield (the third subfield) is included in the out-of-order transmission processing control field (the first field). In a case where the data unit in-order/out-of-order transmission subfield (the second subfield) indicates that the out-of-order transmission is not allowed, the out-of-order transmission processing bitmap subfield (the third subfield) is not included in the out-of-order transmission processing control field (the first field). The reserved subfield is optional.

Optionally, the first subfield may also be referred to as a direction subfield. The first subfield is used for indicating a transmission direction, where the transmission direction includes an uplink direction and/or a downlink direction.

Optionally, a field value of the first subfield includes at least one of the following:
- a first value;
- a second value; or
- a third value.

Herein, in a case where the field value of the first subfield is the first value, the transmission direction is indicated to be the uplink direction. In a case where the field value of the first subfield is the second value, the transmission direction is indicated to be the downlink direction. In a case where the field value of the first subfield is the third value, the transmission direction is indicated to include both the uplink direction and the downlink direction.

Exemplarily, in a case where the field value of the first subfield is 0, it is indicated that the transmission direction is the uplink direction; in a case where the field value of the first subfield is 1, it is indicated that the transmission direction is the downlink direction; and in a case where the field value of the first subfield is 2, it is indicated that the transmission direction includes both the uplink direction and the downlink direction. Alternatively, in a case where the field value of the first subfield is 0, it is indicated that the transmission direction is the uplink direction; in a case where the field value of the first subfield is 2, it is indicated that the transmission direction is the downlink direction; and in a case where the field value of the first subfield is 1, it is indicated that the transmission direction includes both the uplink direction and the downlink direction. Alternatively, in a case where the field value of the first subfield is 2, it is indicated that the transmission direction is the uplink direction; in a case where the field value of the first subfield is 1, it is indicated that the transmission direction is the downlink direction; and in a case where the field value of the first subfield is 0, it is indicated that the transmission direction includes both the uplink direction and the downlink direction. Alternatively, in a case where the field value of the first subfield is 1, it is indicated that the transmission direction is the uplink direction; in a case where the field value of the first subfield is 0, it is indicated that the transmission direction is the downlink direction; and in a case where the field value of the first subfield is 2, it is indicated that the transmission direction includes both the uplink direction and the downlink direction. Alternatively, in a case where the field value of the first subfield is 1, it is indicated that the transmission direction is the uplink direction; in a case where the field value of the first subfield is 2, it is indicated that the transmission direction is the downlink direction; and in a case where the field value of the first subfield is 0, it is indicated that the transmission direction includes both the uplink direction and the downlink direction. Alternatively, in a case where the field value of the first subfield is 2, it is indicated that the transmission direction is the uplink direction; in a case where the field value of the first subfield is 0, it is indicated that the transmission direction is the downlink direction; and in a case where the field value of the first subfield is 1, it is indicated that the transmission direction includes both the uplink direction and the downlink direction.

It should be noted that the "first", "second" and "third" herein are only used to indicate that they are three different field values. In some embodiments, the correspondences between the field values of the first subfield and the transmission directions may be that: the first value is used for indicating that the transmission direction is the uplink direction, the second value is used for indicating that the transmission direction includes both the uplink direction and the downlink direction, and the third value is used for indicating that the transmission direction is the downlink direction. Alternatively, the correspondences may be that: the first value is used for indicating that the transmission direction includes both the uplink direction and the downlink direction, the second value is used for indicating that the transmission direction is the downlink direction, and the third value is used for indicating that the transmission direction is the uplink direction. Alternatively, the correspondences may be that: the first value is used for indicating that the transmission direction is the downlink direction, the second value is used for indicating that the transmission direction is the uplink direction, and the third value is used for indicating that the transmission direction includes both the uplink direction and the downlink direction. Alternatively, the correspondences may be that: the first value is used for indicating that the transmission direction is the downlink direction, the second value is used for indicating that the transmission direction includes both the uplink direction and the downlink direction, and the third value is used for indicating that the transmission direction is the uplink direction. Alternatively, the correspondences may be that: the first value is used for indicating that the transmission direction includes both the uplink direction and the downlink direction, the second value is used for indicating that the transmission direction is the uplink direction, and the third value is used for indicating that the transmission direction is the downlink direction.

Optionally, the second subfield may also be referred to as a default data unit transmission subfield. The second subfield is used for indicating whether the out-of-order transmission is allowed. Alternatively, it is understood that the second subfield is used for indicating whether there is at least one data unit corresponding to the TID among all the data units corresponding to the TID that allows the out-of-order transmission. Optionally, the second subfield is further used for indicating that one of the out-of-order transmission and the in-order transmission is allowed. Optionally, the second subfield is used for indicating that the out-of-order transmission is allowed, or the second subfield is used for indicating that the in-order transmission is allowed.

Optionally, the field value of the second subfield includes at least one of the following:
- a fourth value; or
- a fifth value.

Herein, in a case where the field value of the second subfield is the fourth value, it is indicated that the out-of-order transmission is allowed. In a case where the field value of the second subfield is the fifth value, it is indicated that the out-of-order transmission is not allowed.

Exemplarily, in a case where the field value of the second subfield is 0, it is indicated that the out-of-order transmission is allowed; and in a case where the field value of the second subfield is 1, it is indicated that the out-of-order transmission is not allowed. Alternatively, in a case where the field value of the second subfield is 1, it is indicated that the out-of-order transmission is allowed; and in a case where the field value of the second subfield is 0, it is indicated that the out-of-order transmission is not allowed.

It should be noted that the "fourth" and "fifth" herein are only used to indicate that they are two different field values. In some embodiments, the indication manner for the field value of the second subfield may also be that: the fourth value is used for indicating that the out-of-order transmission is not allowed, and the fifth value is used for indicating that the out-of-order transmission is allowed.

It should also be noted that, in the embodiments of the present disclosure, the field values of different fields may be the same. For example, the first value of the first subfield is 0, and the fourth value of the second subfield is also 0.

In some embodiments, the request frame further includes a second field. Optionally, the second field may also be referred to as a field for out-of-order transmission processing of TID i. The second field is used for indicating the out-of-order processing mode of the data units corresponding to all TIDs, or to indicate the out-of-order processing mode of the data unit corresponding to the TID with the value of i. In the embodiments of the present disclosure, the second field being used to indicate the out-of-order processing mode of the data unit corresponding to the TID with the value of i is taken as an example. Here, the value of i is an integer.

In some embodiments, the second field further includes the aforementioned first subfield, which is used for indicating the transmission direction of the data unit corresponding to the TID with the value of i. The transmission direction includes an uplink direction and/or a downlink direction. Exemplarily, the first subfield is used for indicating that the transmission direction of the data unit corresponding to the TID with the value of i is the uplink transmission. Alternatively, the first subfield is used for indicating that the transmission direction of the data unit corresponding to the TID with the value of i is the downlink transmission. Alternatively, the first subfield is used for indicating that the transmission direction of the data unit corresponding to the TID with the value of i includes the uplink transmission and downlink transmission.

Optionally, the second field is carried in the data unit in-order/out-of-order transmission field. Optionally, the second field is carried in the data transmission element of the aforementioned data unit in-order/out-of-order transmission field. The data transmission element is used for indicating whether the out-of-order transmission is allowed by the data units corresponding to all or part of the TIDs, and further indicating the out-of-order processing mode and the out-of-order processing parameter in a case where the out-of-order transmission is allowed by the data units corresponding to all or part of the TIDs.

Optionally, in a case where the second subfield in the first field indicates that the out-of-order transmission is not allowed, the request frame does not include the second field.

Optionally, in a case where the second subfield in the first field indicates that the out-of-order transmission is allowed, the request frame includes the second field.

Optionally, the second field is determined based on the third subfield in the first field. In a case where the second subfield in the first field indicates that the out-of-order transmission is allowed, the aforementioned first field further includes the third subfield. The third subfield may also be referred to as a field for out-of-order transmission processing presence bitmap, and the third subfield is used for indicating, in a bitmap manner, whether there is the second field in the request frame.

Optionally, the third subfield is indicated based on a bitmap. In a case where there is a sixth value in the bitmap, it is indicated that the request frame includes the second field. In a case where there is no sixth value in the bitmap, it is indicated that the request frame does not include the second field. For example, assuming that the sixth value is 1, when the bitmap corresponding to the third subfield is {0, 1, 0, 0, 0, 0, 0, 0}, it is indicated that the request frame includes the second field.

Optionally, the bitmap is further used for indicating the position of the data unit that allows the out-of-order transmission among the data units corresponding to all TIDs; alternatively, it is understood that the bitmap is used for indicating the value of i. Exemplarily, assuming that the sixth value is 1, when the bitmap corresponding to the third subfield is {0, 1, 0, 0, 0, 0, 0, 0}, it is indicated that the data unit that allows the out-of-order transmission is the data unit corresponding to TID 2, i.e., i = 2.

In some embodiments, the aforementioned second field includes at least one of the following:
- a fourth subfield;
- a fifth subfield;
- a sixth subfield;
- a seventh subfield; or,
- an eighth subfield.

Herein, the presence or absence of the sixth subfield is based on the indication of the fifth subfield, and the presence or absence of the eighth subfield is based on the indication of the seventh subfield.

Exemplarily, as shown in FIG. 7, the field for out-of-order transmission processing of TID i (the second field) includes at least one of the following: a subfield for whether the out-of-order transmission is allowed (the fourth subfield); a subfield for whether there is SN processing and reordering of TID i (the fifth subfield); a subfield for SN processing and reordering of TID i (the sixth subfield); a subfield for whether there is PN processing and replay detection of TID i (the seventh subfield); or, a subfield for PN processing and replay detection of TID i (the eighth subfield).

Herein, the subfield for SN processing and reordering of TID i (the sixth subfield) is indicated based on the subfield for whether there is SN processing and reordering of TID i (the fifth subfield). In a case where the subfield for whether there is SN processing and reordering of TID i (the fifth subfield) indicates that that there is the SN processing and reordering of TID i, the field for out-of-order transmission processing of TID i (the second field) includes the subfield for SN processing and reordering of TID i (the sixth subfield). In a case where the subfield for whether there is SN processing and reordering of TID i (the fifth subfield) indicates that that there is no SN processing and reordering of TID i, the field for out-of-order transmission processing of TID i (the second field) does not include the subfield for SN processing and reordering of TID i (the sixth subfield).

The subfield for PN processing and replay detection of TID i (the eighth subfield) is indicated based on the subfield for whether there is PN processing and replay detection of TID i (the seventh subfield). In a case where the subfield for whether there is PN processing and replay detection of TID i (the seventh subfield) indicates that there is the PN processing and replay detection of TID i, the field for out-of-order transmission processing of TID i (the second field) includes the subfield for PN processing and replay detection of TID i (the eighth subfield). In a case where the subfield for whether there is PN processing and replay detection of TID i (the seventh subfield) indicates that there is no PN processing and replay detection of TID i, the field for out-of-order transmission processing of TID i (the second field) does not include the subfield for PN processing and replay detection of TID i (the eighth subfield).

Optionally, the fourth subfield may also be referred to as the subfield for whether the out-of-order transmission is allowed. The fourth subfield is used for indicating whether the out-of-order transmission is allowed to be used for the data unit corresponding to the TID with the value of i.

Optionally, the field value of the fourth subfield includes at least one of the following:
- a sixth value; or
- a seventh value.

Herein, in a case where the field value of the fourth subfield is the sixth value, it is indicated that the out-of-order transmission is allowed to be used for the data unit corresponding to the TID with the value of i. In a case where the field value of the fourth subfield is the seventh value, it is indicated that that the out-of-order transmission is not allowed to be used for the data unit corresponding to the TID with the value of i.

Exemplarily, in a case where the field value of the fourth subfield is 0, it is indicated that the out-of-order transmission is allowed to be used for the data unit corresponding to the TID with the value of i; and in a case where the field value of the fourth subfield is 1, it is indicated that that the out-of-order transmission is not allowed to be used for the data unit corresponding to the TID with the value of i. Alternatively, in a case where the field value of the fourth subfield is 1, it is indicated that the out-of-order transmission is allowed to be used for the data unit corresponding to the TID with the value of i; and in a case where the field value of the fourth subfield is 0, it is indicated that that the out-of-order transmission is not allowed to be used for the data unit corresponding to the TID with the value of i.

It should be noted that the "sixth" and "seventh" herein are only used to indicate that they are two different field values. In some embodiments, the indication manner for the field value of the fourth subfield may also be that: the sixth value is used for indicating that the out-of-order transmission is not allowed to be used for the data unit corresponding to the TID with the value of i, and the seventh value is used for indicating that the out-of-order transmission is allowed to be used for the data unit corresponding to the TID with the value of i.

Fifth subfield:
Optionally, the fifth subfield may also be referred to as the subfield for whether there is SN processing and reordering of TID i. The fifth subfield is used for indicating whether the sixth subfield is included.

Optionally, the field value of the fifth subfield includes at least one of the following:
- an eighth value; or,
- a ninth value.

Herein, in a case where the field value of the fifth subfield is the eighth value, it is indicated that the sixth subfield is included; and in a case where the field value of the fifth subfield is the ninth value, it is indicated that the sixth subfield is not included.

Exemplarily, in a case where the field value of the fifth subfield is 0, it is indicated that the sixth subfield is included; and in a case where the field value of the fifth subfield is 1, it is indicated that the sixth subfield is not included. Alternatively, in a case where the field value of the fifth subfield is 1, it is indicated that the sixth subfield is included; and in a case where the field value of the fifth subfield is 0, it is indicated that that the sixth subfield is not included.

It should be noted that the "eighth" and "ninth" herein are only used to indicate that they are two different field values. In some embodiments, the indication manner for the field value of the fifth subfield may also be that: the eighth value is used for indicating that the sixth subfield is not included, and the ninth value is used for indicating that the sixth subfield is included.

Optionally, the sixth subfield may also be referred to as the subfield for SN processing and reordering of TID i. The sixth subfield is used for indicating the SN processing and reordering mode of the data unit corresponding to the TID with the value of i.

In some embodiments, in a case where the fifth subfield indicates that the sixth subfield is included in the second field, the sixth subfield includes at least one of the following:
- a first processing mode subfield;
- a subfield for the allowable maximum number of SN spaces;
- a subfield for the allowable maximum number of counters;
- a subfield for whether the out-of-order transmission is allowed by an SN sequence; or,
- a subfield for a condition parameter for delivery to an upper layer.

Exemplarily, as shown in FIG. 8, the subfield for SN processing and reordering of TID i (the sixth subfield) includes at least one of the following: the first processing mode subfield; the subfield for the allowable maximum number of SN spaces; the subfield for the allowable maximum number of counters; the subfield for whether the out-of-order transmission is allowed by the SN sequence; or, the subfield for the condition parameter for delivery to the upper layer.

In some embodiments, the first processing mode subfield is used for indicating the number of SN spaces and/or the number of first counters used for the data unit corresponding to the TID with the value of i. The first counter is a counter used for counting the SNs to obtain the SN sequence.

Optionally, the first processing mode subfield is used for indicating that one SN space and/or one first counter is used for the data unit corresponding to the TID with the value of i. Optionally, the first processing mode subfield is used for indicating that at least one SN space and/or at least one first counter is used for the data unit corresponding to the TID with the value of i.

Optionally, the field value of the first processing mode subfield includes at least one of the following:
- a first processing threshold; or
- a second processing threshold.

Herein, the first processing threshold is used for indicating that one SN space and/or one first counter is used for the data unit corresponding to the TID with the value of i. Optionally, in a case where the data receiver is the STA, the first counter is indexed by < address 1, TID i >, and the address 1 is RA; additionally, in a case where the data receiver is the MLD, the first counter is indexed by < MLD MAC address attached to the STA identified by address 1, TID i >.

The second processing threshold is used for indicating that the at least one SN space and/or at least one first counter is used for the data unit corresponding to the TID with the value of i. Optionally, in a case where the data receiver is the STA, the first counter is indexed by < address 1, TID i, traffic identifier or data unit marker >, and the address 1 is RA; additionally, in a case where the data receiver is the MLD, the first counter is indexed by < MLD MAC address attached to the STA identified by address 1, TID i, traffic identifier or data unit marker >.

It should be noted that the "first" and "second" herein are only used to indicate that they are two different field values. In some embodiments, the indication manner for the field value of the first processing mode subfield may also be that: the first processing threshold is used for indicating that the at least one SN space and/or at least one first counter is used for the data unit corresponding to the TID with the value of i; and the second processing threshold is used for indicating that one SN space and/or one first counter is used for the data unit corresponding to the TID with the value of i.

In some embodiments, the subfield for the allowable maximum number of SN spaces is used for indicating the maximum number of the SN spaces that are allowed to be used for the data unit corresponding to the TID with the value of i. Optionally, the subfield for the allowable maximum number of SN spaces is associated with the first processing mode subfield. In a case where the first processing mode subfield indicates that a SN spaces are used for the data unit corresponding to the TID with the value of i, the maximum number of the SN spaces to be used that is indicated by the subfield for the allowable maximum number of SN spaces needs to be greater than or equal to a, where the value of a is a positive integer.

In some embodiments, the subfield for the allowable maximum number of counters is used for indicating the maximum number of the first counters that are allowed to be used for the data unit corresponding to the TID with the value of i. Optionally, the subfield for the allowable maximum number of counters is associated with the first processing mode subfield. In a case where the first processing mode subfield indicates that b first counters are used for the data unit corresponding to the TID with the value of i, the maximum number of the first counters to be used that is indicated by the subfield for the allowable maximum number of counters needs to be greater than or equal to b, where the value of b is a positive integer.

In some embodiments, the subfield for whether the out-of-order transmission is allowed by the SN sequence is used for indicating whether the out-of-order transmission is allowed by the data unit corresponding to the TID with the value of i that uses the SN space and/or the first counter.

Optionally, the field value of the subfield for whether the out-of-order transmission is allowed by the SN sequence includes at least one of the following:
- a tenth value; or
- an eleventh value.

Herein, the tenth value is used for indicating that the out-of-order transmission is allowed by the data unit corresponding to the TID with the value of i that uses the SN space and/or the first counter; and the eleventh value is used for indicating that the out-of-order transmission is not allowed by the data unit corresponding to the TID with the value of i that uses the SN space and/or the first counter.

Exemplarily, in a case where the field value of the subfield for whether the out-of-order transmission is allowed by the SN sequence is 0, it is indicated that the out-of-order transmission is allowed by the data unit corresponding to the TID with the value of i that uses the SN space and/or the first counter. In a case where the field value of the subfield for whether the out-of-order transmission is allowed by the SN sequence is 1, it is indicated that the out-of-order transmission is not allowed by the data unit corresponding to the TID with the value of i that uses the SN space and/or the first counter. Alternatively, in a case where the field value of the subfield for whether the out-of-order transmission is allowed by the SN sequence is 1, it is indicated that the out-of-order transmission is allowed by the data unit corresponding to the TID with the value of i that uses the SN space and/or the first counter. In a case where the field value of the subfield for whether the out-of-order transmission is allowed by the SN sequence is 0, it is indicated that the out-of-order transmission is not allowed by the data unit corresponding to the TID with the value of i that uses the SN space and/or the first counter.

It should be noted that the "tenth" and "eleventh" herein are only used to indicate that they are two different field values. In some embodiments, the indication manner for the field value of the processing mode subfield may also be that: the tenth value is used for indicating that the out-of-order transmission is not allowed by the data unit corresponding to the TID with the value of i that uses the SN space and/or the first counter; and the eleventh value is used for indicating that the out-of-order transmission is allowed by the data unit corresponding to the TID with the value of i that uses the SN space and/or the first counter.

In some embodiments, the subfield for the condition parameter for delivery to the upper layer is used for indicating the condition parameter used to deliver the received data unit to the upper layer. Alternatively, the subfield for the condition parameter for delivery to the upper layer is used for indicating the condition parameter used to deliver the received data unit to the next MAC process. In some embodiments, the subfield for the condition parameter for delivery to the upper layer is required to be set in case where there is the data unit that is with the preceding transmission order but is not received. For example, assuming that the data units transmitted in the transmission order includes a first data unit, a second data unit, and a third data unit, when the first data unit and the third data unit are successfully transmitted and the second data unit fails to be transmitted, it is necessary to indicate the subfield for the condition parameter for delivery to the upper layer for the first data unit and the third data unit that are successfully transmitted.

In some embodiments, the subfield for the condition parameter for delivery to the upper layer includes at least one of the following:
- a subfield for whether there is an SN deviation threshold;
- an SN deviation threshold subfield;
- a subfield for whether there is a buffer waiting time threshold; or,
- a buffer waiting time threshold subfield.

Herein, the presence or absence of the SN deviation threshold subfield is indicated based on the subfield for whether there is the SN deviation threshold. The presence or absence of the buffer waiting time threshold subfield is indicated based on the subfield for whether there is the buffer waiting time threshold.

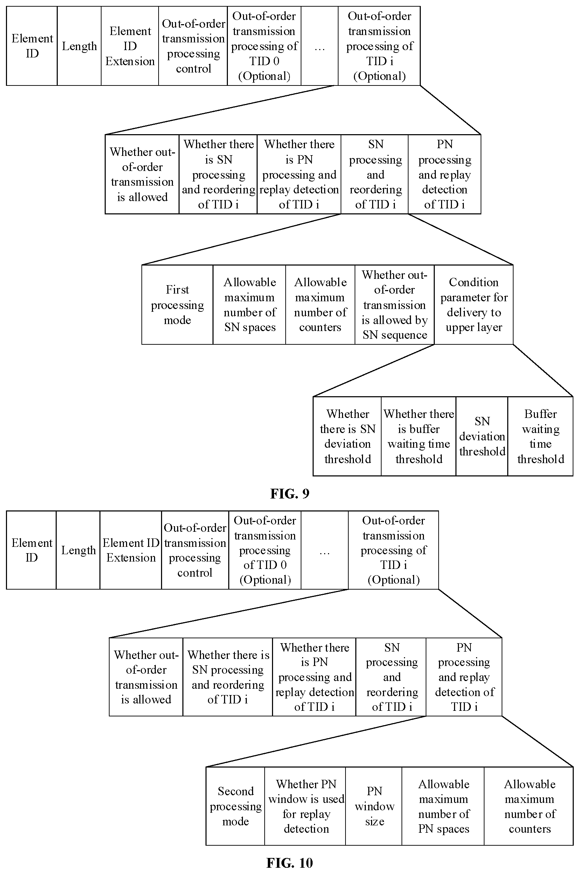

Exemplarily, as illustrated in FIG. 9, the subfield for the condition parameter for delivery to the upper layer includes at least one of the following: the subfield for whether there is the SN deviation threshold; the SN deviation threshold subfield; the subfield for whether there is the buffer waiting time threshold; or, the buffer waiting time threshold subfield.

In some embodiments, the subfield for whether there is the SN deviation threshold is used for indicating whether the SN deviation threshold subfield is included in the aforementioned subfield for the condition parameter for delivery to the upper layer.

Optionally, the field value of the subfield for whether there is the SN deviation threshold includes at least one of the following:
- a twelfth value; or
- a thirteenth value.

Herein, the twelfth value is used for indicating that the SN deviation threshold subfield is included in the aforementioned subfield for the condition parameter for delivery to the upper layer; and the thirteenth value is used for indicating that the SN deviation threshold subfield is not included in the aforementioned subfield for the condition parameter for delivery to the upper layer.

Exemplarily, in a case where the field value of the subfield for whether there is the SN deviation threshold is 1, it is indicated that the SN deviation threshold subfield is included in the aforementioned subfield for the condition parameter for delivery to the upper layer. In a case where the field value of the subfield for whether there is the SN deviation threshold is 0, it is indicated that the SN deviation threshold subfield is not included in the aforementioned subfield for the condition parameter for delivery to the upper layer. Alternatively, in a case where the field value of the subfield for whether there is the SN deviation threshold is 0, it is indicated that the SN deviation threshold subfield is included in the aforementioned subfield for the condition parameter for delivery to the upper layer. In a case where the field value of the subfield for whether there is the SN deviation threshold is 1, it is indicated that the SN deviation threshold subfield is not included in the aforementioned subfield for the condition parameter for delivery to the upper layer.

It should be noted that the "twelfth" and "thirteenth" herein are only used to indicate that they are two different field values. In some embodiments, the indication manner for the field value of the subfield for whether there is the SN deviation threshold may be that: the twelfth value is used for indicating that the SN deviation threshold subfield is not included in the aforementioned subfield for the condition parameter for delivery to the upper layer; and the thirteenth value is used for indicating that the SN deviation threshold subfield is included in the aforementioned subfield for the condition parameter for delivery to the upper layer.

In some embodiments, in a case where the subfield for whether there is the SN deviation threshold indicates that the SN deviation threshold subfield is included in the subfield for the condition parameter for delivery to the upper layer, the SN deviation threshold subfield is included in the subfield for the condition parameter for delivery to the upper layer. The SN deviation threshold subfield is used for indicating the allowable maximum deviation between the first serial number and the second serial number. Herein, the first serial number is the serial number of the received data unit, and the second serial number is the serial number of the unreceived data unit. Alternatively, it may be understood that the first serial number is the serial number corresponding to the last received data unit, and the second serial number is the serial number of the first unreceived data unit.

In some embodiments, the SN deviation threshold subfield may also be understood to be used to limit the maximum deviation between the first serial number and the second serial number. In a case where the deviation between the serial number corresponding to the received data unit and the serial number of the first unreceived data unit is less than or equal to the maximum deviation, the received data unit needs to be delivered to the upper layer or needs to be delivered to the next MAC process.

In some embodiments, the subfield for whether there is the buffer waiting time threshold is used for indicating whether the buffer waiting time threshold subfield is included in the aforementioned subfield for the condition parameter for delivery to the upper layer.

Optionally, the field value of the subfield for whether there is the buffer waiting time threshold includes at least one of the following:
- a fourteenth value; or
- a fifteenth value.

Herein, the fourteenth value is used for indicating that the buffer waiting time threshold subfield is included in the aforementioned subfield for the condition parameter for delivery to the upper layer; and the fifteenth value is used for indicating that the buffer waiting time threshold subfield is not included in the aforementioned subfield for the condition parameter for delivery to the upper layer.

Exemplarily, in a case where the field value of the subfield for whether there is the buffer waiting time threshold is 1, it is indicated that the buffer waiting time threshold subfield is included in the aforementioned subfield for the condition parameter for delivery to the upper layer. In a case where the field value of the subfield for whether there is the buffer waiting time threshold is 0, it is indicated that the buffer waiting time threshold subfield is not included in the aforementioned subfield for the condition parameter for delivery to the upper layer. Alternatively, in a case where the field value of the subfield for whether there is the buffer waiting time threshold is 0, it is indicated that the buffer waiting time threshold subfield is included in the aforementioned subfield for the condition parameter for delivery to the upper layer. In a case where the field value of the subfield for whether there is the buffer waiting time threshold is 1, it is indicated that the buffer waiting time threshold subfield is not included in the aforementioned subfield for the condition parameter for delivery to the upper layer.

It should be noted that the "fourteenth" and "fifteenth" herein are only used to indicate that they are two different field values. In some embodiments, the indication manner for the field value of the subfield for whether there is the buffer waiting time threshold may be that: the fourteenth value is used for indicating that the buffer waiting time threshold subfield is not included in the aforementioned subfield for the condition parameter for delivery to the upper layer, and the fifteenth value is used for indicating that the buffer waiting time threshold subfield is included in the aforementioned subfield for the condition parameter for delivery to the upper layer.

In some embodiments, in a case where the subfield for whether there is the buffer waiting time threshold indicates that the buffer waiting time threshold subfield is included in the subfield for the condition parameter for delivery to the upper layer, the buffer waiting time threshold subfield is included in the subfield for the condition parameter for delivery to the upper layer. The buffer waiting time threshold subfield is used for indicating the maximum waiting time of the received data unit in the buffer.

In some embodiments, the buffer waiting time threshold subfield may also be understood to be used to limit the maximum waiting time of the received data unit in the buffer. In a case where the waiting time of the received data unit in the buffer is greater than the maximum waiting time, the received data unit needs to be delivered to the upper layer or needs to be delivered to the next MAC process.

In some embodiments, in a case where the SN deviation threshold subfield and the buffer waiting time threshold subfield are included in the subfield for the condition parameter for delivery to the upper layer, the received data unit with the deviation from the serial number of the first unreceived data unit less than or equal to the maximum deviation and with the waiting time in the buffer greater than the maximum waiting time needs to be delivered to the upper layer or to the next MAC process.

### Seventh subfield:

In some embodiments, the seventh subfield may also be referred to as the subfield for whether there is PN processing and replay detection of TID i. The seventh subfield is used for indicating whether the eighth subfield is included.

Optionally, the field value of the seventh subfield includes at least one of the following:
- a sixteenth value; or,
- a seventeenth value.

Herein, in a case where the field value of the seventh subfield is the sixteenth value, it is indicated that the eighth subfield is included; and in a case where the field value of the seventh subfield is the seventeenth value, it is indicated that the eighth subfield is not included.

Exemplarily, in a case where the field value of the seventh subfield is 0, it is indicated that the eighth subfield is included; and in a case where the field value of the seventh subfield is 1, it is indicated that the eighth subfield is not included. Alternatively, in a case where the field value of the seventh subfield is 1, it is indicated that the eighth subfield is included; and in a case where the field value of the seventh subfield is 0, it is indicated that the eighth subfield is not included.

It should be noted that the "sixteenth" and "seventeenth" herein are only used to indicate that they are two different field values. In some embodiments, the indication manner for the field value of the seventh subfield may also be that: the sixteenth value is used for indicating that the eighth subfield is not included, and the seventeenth value is used for indicating that the eighth subfield is included.

Optionally, the eighth subfield may also be referred to as the subfield for PN processing and replay detection of TID i. The eighth subfield is used for indicating the PN processing mode and the replay detection mode of the data unit corresponding to the TID with the value of i.

In some embodiments, in a case where the seventh subfield indicates that the eighth subfield is included in the second field, the eighth subfield includes at least one of the following:
- a second processing mode subfield;
- a subfield for whether a PN window is used for replay detection;
- a PN window size subfield;
- a subfield for allowable maximum number of PN spaces; or
- a subfield for allowable maximum number of counters.

Exemplarily, as shown in FIG. 10, the subfield for PN processing and replay detection of TID i (seventh subfield) includes at least one of the following: the second processing mode subfield; the subfield for whether the PN window is used for replay detection; the PN window size subfield; the subfield for the allowable maximum number of PN spaces; or, the subfield for the allowable maximum number of counters.

In some embodiments, the second processing mode subfield is used for indicating the number of PN spaces and/or the number of second counters used for the data unit corresponding to the TID with the value of i. The second counter is a counter for counting PNs to obtain the PN sequence.

Optionally, the second processing mode subfield is used for indicating that one PN space and/or one second counter is used for the data unit corresponding to the TID with the value of i. Optionally, the second processing mode subfield is used for indicating that at least one PN space and/or at least one second counter is used for the data unit corresponding to the TID with the value of i.

Optionally, the field value of the second processing mode subfield includes at least one of the following:
- a third processing threshold; or
- a fourth processing threshold.

Herein, the third processing threshold is used for indicating that one PN space and/or one second counter is used for the data unit corresponding to the TID with the value of i. Optionally, in a case where the data receiver is the STA, the second counter is associated with < TA, RA, TID i or priority corresponding to TID i >; additionally, in a case where the data receiver is the MLD, the second counter is associated with < MLD MAC address attached to the STA identified by TA, MLD MAC address attached to the STA identified by RA, TID i or priority corresponding to TID i >.

The fourth processing threshold is used for indicating that the at least one PN space and/or at least one second counter is used for the data unit corresponding to the TID with the value of i. Optionally, in a case where the data receiver is the STA, the second counter is associated with < TA, RA, TID i or priority corresponding to TID i, traffic identifier or data unit marker >; additionally, in a case where the data receiver is the MLD, the second counter is associated with < MLD MAC address attached to the STA identified by TA, MLD MAC address attached to the STA identified by RA, TID i or priority corresponding to TID i, traffic identifier or data unit marker >.

It should be noted that the "third" and "fourth" herein are only used to indicate that they are two different field values. In some embodiments, the indication manner for the field value of the second processing mode subfield may be that: the third processing threshold is used for indicating that the at least one PN space and/or at least one second counter is used for the data unit corresponding to the TID with the value of i; and the fourth processing threshold is used for indicating that one PN space and/or one second counter is used for the data unit corresponding to the TID with the value of i.

In some embodiments, the subfield for whether the PN window is used for replay detection may be used for indicating whether the PN window is used for the replay detection on the data unit corresponding to the TID with the value of i.

Optionally, the field value of the subfield for whether the PN window is used for replay detection includes at least one of the following:
- an eighteenth value; or,
- a nineteenth value.

Herein, the eighteenth value is used for indicating that the PN window is used for the replay detection on the data unit corresponding to the TID with the value of i; and the nineteenth value is used for indicating that the PN window is not used for the replay detection on the data unit corresponding to the TID with the value of i.

Exemplarily, in a case where the field value of the subfield for whether the PN window is used for replay detection is 0, it is indicated that the PN window is used for the replay detection on the data unit corresponding to the TID with the value of i. In a case where the field value of the subfield for whether the PN window is used for replay detection is 1, it is indicated that the PN window is not used for the replay detection on the data unit corresponding to the TID with the value of i. Alternatively, in a case where the field value of the subfield for whether the PN window is used for replay detection is 1, it is indicated that the PN window is used for the replay detection on the data unit corresponding to the TID with the value of i. In a case where the field value of the subfield for whether the PN window is used for replay detection is 0, it is indicated that the PN window is not used for the replay detection on the data unit corresponding to the TID with the value of i.

It should be noted that the "eighteenth" and "nineteenth" herein are only used to indicate that they are two different field values. In some embodiments, the indication manner for the field value of the subfield for whether the PN window is used for replay detection may also be that: the eighteenth value is used for indicating that the PN window is not used for the replay detection on the data unit corresponding to the TID with the value of i; and the nineteenth value is used for indicating that the PN window is used for the replay detection on the data unit corresponding to the TID with the value of i.

In some embodiments, in a case where the subfield for whether the PN window is used for replay detection indicates that the PN window is not used for the replay detection on the data unit corresponding to the TID with the value of i, the replay detection is performed on the data unit corresponding to the TID with the value of i, based on the PN value of the data unit corresponding to the TID with the value of i and the count value of the second counter.

In some embodiments, in a case where the subfield for whether the PN window is used for replay detection indicates that the PN window is not used for the replay detection on the data unit corresponding to the TID with the value of i, the PN window size subfield is not included in the eighth subfield.

In some embodiments, in a case where the subfield for whether the PN window is used for replay detection indicates that the PN window is used for the replay detection on the data unit corresponding to the TID with the value of i, the PN window size subfield is included in the eighth subfield. The PN window size subfield is used for indicating the size of the PN window used for the replay detection on the data unit corresponding to the TID with the value of i.

Optionally, in a case where the difference value between the PN value corresponding to the data unit corresponding to the TID with the value of i and the PN value corresponding to the last received data unit is less than or equal to the size of the PN window, it is considered that the data unit corresponding to the TID with the value of i passes through the replay detection. In a case where the difference value between the PN value corresponding to the data unit corresponding to the TID with the value of i and the PN value corresponding to the last received data unit is greater than the size of the PN window, it is considered that the data unit corresponding to the TID with the value of i fails to pass through the replay detection, and the data unit is discarded.

In some embodiments, the subfield for the allowable maximum number of PN spaces is used for indicating the maximum number of the PN spaces that are allowed to be used for the data unit corresponding to the TID with the value of i. Optionally, the subfield for the allowable maximum number of PN spaces is associated with the second processing mode subfield. In a case where the second processing mode subfield indicates that c PN spaces are used for the data unit corresponding to the TID with the value of i, the maximum number of the PN spaces to be used that is indicated by the subfield for the allowable maximum number of PN spaces needs to be greater than or equal to c, where the value of c is a positive integer.

In some embodiments, the subfield for the allowable maximum number of counters is used for indicating the maximum number of the second counters that are allowed to be used for the data unit corresponding to the TID with the value of i. Optionally, the subfield for the allowable maximum number of counters is associated with the second processing mode subfield. In a case where the second processing mode subfield indicates that d first counters are used for the data unit corresponding to the TID with the value of i, the maximum number of the second counters to be used that is indicated by the subfield for the allowable maximum number of counters needs to be greater than or equal to d, where the value of d is a positive integer.

In summary, in the method provided by the embodiment, by sending the request frame, the first device can request the negotiation for the out-of-order transmission in advance through the request frame during data transmission with other communication devices, which can specify how to use the out-of-order transmission before the data transmission. Thereby, it can ensure that the data transmission between the first device and other communication devices can be performed based on a clear transmission mechanism.

In some embodiments, the aforementioned request frame includes a first data unit transmission element, and the first data unit transmission element is used for indicating a transmission mode parameter corresponding to the request frame. The transmission mode parameter includes: whether the out-of-order transmission is allowed in at least one transmission direction, and/or, the out-of-order processing mode and the out-of-order processing parameter in a case where the out-of-order transmission is allowed.

In some embodiments, in a case where the first device has been associated or re-associated with the second device, the aforementioned request frame is a request frame for data transmission, which is used for requesting to negotiate whether the out-of-order transmission is used. Optionally, the request frame for data transmission is further used for requesting to negotiate the out-of-order processing mode and the out-of-order processing parameter in a case where the out-of-order transmission is allowed.

In some embodiments, during the process in which the first device is associated or re-associated with the second device, the aforementioned request frame is a request frame for association or re-association, which is used for requesting the association or re-association with the second device, as well as for requesting to negotiate whether the out-of-order transmission is used. Optionally, the request frame for association or re-association is further used for requesting to negotiate the out-of-order processing mode and the out-of-order processing parameter in a case where the out-of-order transmission is allowed.

### For the response frame:

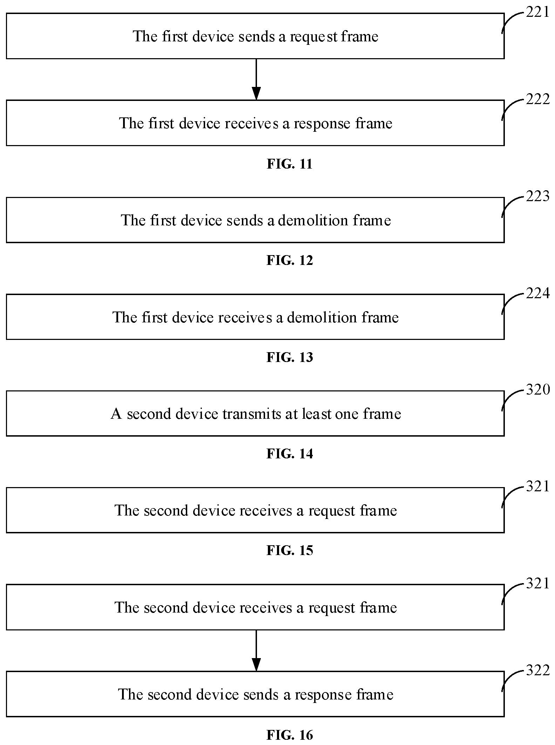

FIG. 11 shows a flowchart of a negotiation method for data transmission according to an exemplary embodiment of the present disclosure. The method is performed by the first device, and the aforementioned operation 220 further includes the following sub operation 222.

At block 222, the first device receives a response frame.

In some embodiments, the response frame is used for responding to whether the out-of-order transmission is used. Optionally, the response frame is used for responding that the out-of-order transmission is used. Optionally, the request frame is used for responding that the out-of-order transmission is not used. Optionally, the response frame is used for responding that the out-of-order transmission is used for a data unit corresponding to a TID with a value of m, where the value of m is an integer. Optionally, the response frame is used for responding that the out-of-order transmission is not used for a data unit corresponding to a TID with a value of n, where the value of n is an integer. In some embodiments, the response frame is further used for responding to whether the out-of-order processing mode and the out-of-order processing parameter are used in a case where the out-of-order transmission is allowed.

In some embodiments, the response frame is an action frame. In some embodiments, the response frame includes at least one field. For example, the response frame includes a second action field, which is used for responding to the transaction requested by the request frame. Exemplarily, as shown in Table 3 below, the second action field includes: a category field, a protected action field, a dialog token field, a status code field, and a data unit in-order/out-of-order transmission field.

**Table 3**

| Order | Information |
|---|---|
| 1 | Category |
| 2 | Protected Action |
| 3 | Dialog Token |
| 4 | Status Code |
| 5 | Data unit in-order/out-of-order transmission |

Herein, the category field may be set to be a corresponding value shown in the "Code" column in the "Category" value in the IEEE 802.11 specification. An action frame of a given category is referred to as a < Category Name > action frame. For example, a frame of the protected UHR category is referred to as a protected UHR action frame.

The category field is followed by the protected action field, which is the field used for distinguishing the protected action frame format. Here, the specific protected action frame format may be indicated by the corresponding protected action field value.

The dialog token field is typically set to be a non-zero value, which is selected by the station that sends the response frame, to identify the transaction that is requested to respond to the request frame. When the response frame is not used for responding to the transaction requested by the request frame, the field value of the dialog token field may be set to be a zero value.

In some embodiments, the response frame includes the status code field, and the first device determines, based on the received status code field, whether a request corresponding to the request frame is received by the peer device. Optionally, the status code field is used for indicating whether the request corresponding to the request frame is received.

Optionally, the field value of the status code field includes at least one of the following:
- a first value;
- a second value; or,
- a third value.

In a case where the field value of the status code field is the first value, the status code field is used for indicating that the request corresponding to the request frame is accepted.

In a case where the field value of the status code field is the second value, the status code field is used for indicating that the request corresponding to the request frame is rejected.

In a case where the field value of the status code field is the third value, the status code field is used for indicating that the request corresponding to the request frame is rejected, as well as for suggesting negotiation for whether the out-of-order transmission is used in at least one transmission direction, and/or, the out-of-order processing mode and the out-of-order processing parameter of the data unit corresponding to at least one TID when the out-of-order transmission is allowed.

It should be noted that the "first", "second" and "third" herein are only used to indicate that they are three different field values. In some embodiments, the indication for the field value of the status code field may also be that: the first value indicates that the request corresponding to the request frame is accepted. The second value indicates that the request corresponding to the request frame is rejected, and suggests negotiation for whether the out-of-order transmission is used in at least one transmission direction, and/or, the out-of-order processing mode and the out-of-order processing parameter of the data unit corresponding to at least one TID in a case where the out-of-order transmission is allowed. In addition, the third value indicates that the request corresponding to the request frame is rejected. Alternatively, the first value indicates that the request corresponding to the request frame is rejected, and suggests negotiation for whether the out-of-order transmission is used in at least one transmission direction, and/or, the out-of-order processing mode and the out-of-order processing parameter of the data unit corresponding to at least one TID in a case where the out-of-order transmission is allowed. The second value indicates that the request corresponding to the request frame is rejected. In addition, the third value indicates that the request corresponding to the request frame is accepted. Alternatively, the first value indicates that the request corresponding to the request frame is rejected. The second value indicates that the request corresponding to the request frame is accepted. In addition, the third value indicates that the request corresponding to the request frame is rejected, and suggests negotiation for whether the out-of-order transmission is used in at least one transmission direction, and/or, the out-of-order processing mode and the out-of-order processing parameter of the data unit corresponding to at least one TID in a case where the out-of-order transmission is allowed. Alternatively, the first value indicates that the request corresponding to the request frame is rejected. The second value indicates that the request corresponding to the request frame is rejected, and suggests negotiation for whether the out-of-order transmission is used in at least one transmission direction, and/or, the out-of-order processing mode and the out-of-order processing parameter of the data unit corresponding to at least one TID in a case where the out-of-order transmission is allowed. In addition, the third value indicates that the request corresponding to the request frame is accepted. Alternatively, the first value indicates that the request corresponding to the request frame is rejected, and suggests negotiation for whether the out-of-order transmission is used in at least one transmission direction, and/or, the out-of-order processing mode and the out-of-order processing parameter of the data unit corresponding to at least one TID in a case where the out-of-order transmission is allowed. The second value indicates that the request corresponding to the request frame is accepted. In addition, the third value indicates that the request corresponding to the request frame is rejected.

Exemplary, as shown in Table 4 below:

**Table 4**

| Field value | Name | Definition |
|---|---|---|
| 0 | SUCCESS | Successful |
| 210 | Suggestion for data unit in-order/out-of-order transmission (PREFERRED_INORDER_OR_OUTOFORDER_DELIVERY_SU GGEST) | Request rejected, and providing suggestion for in-order/out-of-order transmission of data unit |
| 211 | Rejection (DENIED_INORDER_OR_OUTOFORDER_DELIVERY) | Request rejected |

Optionally, the response frame further includes a third field, in a case where the field value of the status code field is the third value, i.e., in a case of indicating that the request corresponding to the request frame is rejected, and suggesting negotiation for whether the out-of-order transmission is used in at least one transmission direction, and/or, the out-of-order processing mode and the out-of-order processing parameter of the data unit corresponding to at least one TID when the out-of-order transmission is allowed. Optionally, the third field may also be referred to as the data unit in-order/out-of-order transmission field. Alternatively, the third field is considered to be carried in the data unit in-order/out-of-order transmission field. The data unit in-order/out-of-order transmission field includes at least one data transmission element. The data transmission element may also be referred to as a data unit in-order/out-of-order transmission element. Optionally, when the data unit in-order/out-of-order transmission field includes at least two data transmission elements, different data transmission elements are used to indicate data transmission in different transmission directions. Exemplarily, in a case where the data unit in order/out of order transmission field includes two data transmission elements, one data transmission element is used for indicating data transmission in an uplink direction, and the another data transmission element is used for indicating data transmission in a downlink direction.

In some embodiments, the third field is used for indicating whether the out-of-order transmission is allowed by the data unit corresponding to at least one TID in at least one transmission direction, and/or, the out-of-order processing mode and the out-of-order processing parameter when the out-of-order transmission is allowed by the data unit corresponding to at least one TID in at least one transmission direction.

Optionally, the third field is used for indicating that the out-of-order transmission is allowed by the data unit corresponding to at least one TID in at least one transmission direction.

Optionally, the third field is used for indicating that the out-of-order transmission is not allowed by the data unit corresponding to at least one TID in at least one transmission direction.

Optionally, the third field is used for indicating the out-of-order processing mode and the out-of-order processing parameter in a case where the out-of-order transmission is allowed by the data unit corresponding to the at least one TID in at least one transmission direction.

Optionally, the third field is used for indicating that the out-of-order transmission is allowed by the data unit corresponding to at least one TID in at least one transmission direction, as well as the out-of-order processing mode and the out-of-order processing parameter in a case where the out-of-order transmission is allowed by the data unit corresponding to at least one TID in at least one transmission direction.

In some embodiments, the implementation of the third field is similar to the implementation of the first field described above, and the details may be reference to the implementation of the first field in the foregoing operation 221.

In summary, in the method provided by the embodiment, by receiving the response frame, the first device can specify in advance how to use the out-of-order transmission through the response frame during data transmission with other communication devices. Thereby, it can ensure that the data transmission between the first device and other communication devices can be performed based on a clear transmission mechanism.

In some embodiments, in a case where the response frame indicates that the request corresponding to the request frame is accepted, the data transmission is performed according to the out-of-order transmission mode requested by the request frame. Exemplarily, the request frame requests that the out-of-order transmission is used for the data unit corresponding to the TID with the value of i. In a case where the response frame indicates that the request corresponding to the request frame is accepted, the out-of-order transmission is used for the data unit corresponding to the TID with the value of i.

In some embodiments, in a case where the response frame indicates that the request corresponding to the request frame is rejected, the data transmission is performed according to the transmission mode used before the request frame is sent. The transmission mode used before sending the request frame includes the in-order transmission mode or the out-of-order transmission mode. Exemplarily, before sending the request frame, the in-order transmission is used for the data unit corresponding to the TID with the value of i. The request frame requests that the out-of-order transmission is used for the data unit corresponding to the TID with the value of i; and when the response frame indicates that the request corresponding to the request frame is rejected, the in-order transmission is still used for the data unit corresponding to the TID with the value of i.

In some embodiments, the negotiation process of data transmission is repeated in a case where the response frame indicates that the request corresponding to the request frame is rejected, and suggests negotiation for whether the out-of-order transmission is used in at least one transmission direction, and/or, the out-of-order processing mode and the out-of-order processing parameter of the data unit corresponding to at least one TID when the out-of-order transmission is allowed. Moreover, in the case of suggesting whether the out-of-order transmission is used in at least one transmission direction, the request frame is sent and the response frame is accepted.

In some embodiments, the response frame includes a second data unit transmission element, in a case where the response frame indicates that the request corresponding to the request frame is rejected as well as suggests negotiation for whether the out-of-order transmission is used in at least one transmission direction, and/or, the out-of-order processing mode and the out-of-order processing parameter of the data unit corresponding to at least one TID when the out-of-order transmission is allowed. Here, the second data unit transmission element is used for indicating the suggested transmission mode parameter. The transmission mode parameter includes: whether the out-of-order transmission is allowed in at least one transmission direction, and/or, the out-of-order processing mode and the out-of-order processing parameter when the out-of-order transmission is allowed.

In some embodiments, in a case where the first device has been associated or re-associated with the second device, the aforementioned response frame is a request frame for data transmission, which is only used for responding to whether the out-of-order transmission is used. Optionally, the request frame for data transmission is further used for responding to whether the out-of-order processing mode and the out-of-order processing parameter are used in a case where the out-of-order transmission is allowed.

In some embodiments, during the process in which the first device is associated or re-associated with the second device, the aforementioned response frame is a request frame for association or re-association, which is used for responding to whether to be associated or re-associated with the second device, as well as for responding to whether the out-of-order transmission is used. Optionally, the request frame for association or re-association is further used for responding to whether the out-of-order processing mode and the out-of-order processing parameter are used in a case where the out-of-order transmission is allowed.

For the demolition frame:
FIG. 12 shows a flowchart of a negotiation method for data transmission according to an exemplary embodiment of the present disclosure. The method is performed by the first device, and the aforementioned operation 220 further includes the following sub operation 223.

At block 223, the first device sends a demolition frame.

In some embodiments, the demolition frame is used for demolishing a data transmission mode used for the negotiated data unit. Optionally, the demolition frame is used for demolishing the out-of-order transmission mode that is used for the negotiated data unit. Optionally, the demolition frame is used for demolishing the negotiated out-of-order transmission that is allowed. Optionally, the demolition frame is used for demolishing the out-of-order transmission that is allowed by the negotiated data unit corresponding to the TID with the value of i.

In some embodiments, the demolition frame includes at least one field. For example, the demolition frame includes a third action field, which is used for indicating the transaction corresponding to the demolition frame. Exemplarily, as shown in Table 5 below, the third action field includes a category field and a protected action field.

**Table 5**

| Order | Information |
|---|---|
| 1 | Category |
| 2 | Protected Action |

Herein, the category field may be set to be a corresponding value shown in the "Code" column in the "Category" value in the IEEE 802.11 specification. An action frame of a given category is referred to as a < Category Name > action frame. For example, a frame of the protected UHR category is referred to as a protected UHR action frame.

The category field is followed by the protected action field, which is field used for distinguishing the protected action frame format. Here, the specific protected action frame format may be indicated by the corresponding protected action field value.

FIG. 13 shows a flowchart of a negotiation method for data transmission according to an exemplary embodiment of the present disclosure. The method is performed by the first device, and the aforementioned operation 220 further includes the following sub operation 224.

At block 224, the first device receives a demolition frame.

Specifically, the details of the implementation of the demolition frame may be reference to the foregoing operation 223.

FIG. 14 shows a flowchart of a negotiation method for data transmission according to an exemplary embodiment of the present disclosure. The method is performed by a second device. The second device is a multi-link device that serves as an access point, or the second device is a multi-link device that serves as not an access point. In embodiments of the present disclosure, the second device is the data receiver. The method includes the following operation 320.

At block 320, the second device transmits at least one frame.

In some embodiments, the second device is the AP or the STA in the aforementioned communication system. Optionally, in the embodiments of the present disclosure, the second device is the receiver device that receives a request, sent by the first device, to negotiate whether out-of-order transmission is used as an example for illustration.

The second device transmits at least one frame for negotiating whether the out-of-order transmission is used. In the embodiments, the term "transmission" may be considered to be the sending and/or receiving operation.

Optionally, the frame includes at least one of the following:
- a request frame;
- a response frame; or,
- a demolition frame.

In some embodiments, the second device transmits at least one request frame, and the request frame is used for requesting to negotiate whether the out-of-order transmission is used.

In some embodiments, the second device transmits at least one response frame, and the response frame is used for responding to whether the out-of-order transmission is used.

In some embodiments, the second device transmits at least one demolition frame, and the demolition frame is used for demolishing a data transmission mode used for the negotiated data unit.

In some embodiments, the second device transmits at least one request frame and at least one response frame.

In some embodiments, the second device transmits at least one request frame and at least one demolition frame.

In some embodiments, the second device transmits at least one response frame and at least one demolition frame.

In some embodiments, the second device transmits at least one request frame, at least one response frame, and at least one demolition frame.

In some embodiments, the at least one frame is further used for negotiating an out-of-order processing mode and an out-of-order processing parameter in a case where the out-of-order transmission is allowed. Optionally, the request frame is further used for requesting to negotiate the out-of-order processing mode and the out-of-order processing parameter in a case where the out-of-order transmission is allowed. Optionally, the response frame is further used for responding to whether the out-of-order processing mode and the out-of-order processing parameter are used in a case where the out-of-order transmission is allowed.

In some embodiments, the out-of-order processing mode and the out-of-order processing parameter include at least one of the following information:
- transmission direction;
- allowance of one of the out-of-order transmission and in-order transmission;
- whether the out-of-order transmission is allowed to be used for a data unit corresponding to at least one traffic identifier (TID);
- a serial number (SN) processing and reordering mode of a data unit corresponding to at least one TID;
- a packet number (PN) processing and replay detection mode of a data unit corresponding to at least one TID;
- the number of SN spaces and/or the number of first counters used for a data unit corresponding to at least one TID;
- the maximum number of SN spaces allowed to be used for a data unit corresponding to at least one TID;
- the maximum number of first counters allowed to be used for a data unit corresponding to at least one TID;
- whether the out-of-order transmission is allowed by a data unit corresponding to at least one TID that uses a SN space and/or a first counter;
- a condition parameter for delivering a data unit corresponding to at least one TID that is received to an upper layer;
- the allowable maximum deviation between a serial number of a data unit corresponding to at least one TID that is received and a serial number of a data unit corresponding to at least one TID that is unreceived;
- the longest waiting time of a data unit corresponding to at least one TID that is received in a buffer;
- the number of PN spaces and/or the number of second counters used for a data unit corresponding to at least one TID;
- the maximum number of PN spaces that are allowed to be used for a data unit corresponding to at least one TID;
- the maximum number of second counters that are allowed to be used for a data unit corresponding to at least one TID;
- whether a PN window is used for replay detection on a data unit corresponding to at least one TID; or
- a size of a PN window that is used for replay detection on a data unit corresponding to at least one TID.

Herein, the data unit corresponding to at least one TID includes the data unit corresponding to one TID and/or the data unit corresponding to each TID of at least two TIDs.

In summary, in the method provided by the embodiment, by transmitting the at least one frame for negotiating whether the out-of-order transmission is used, the second device can perform the negotiation for the out-of-order transmission in advance through the frame for negotiating whether the out-of-order transmission is used during data transmission with other communication devices, which can specify how to use the out-of-order transmission by transmitting the frame for negotiating whether the out-of-order transmission is used before the data transmission. Thereby, it can ensure that the data transmission between the second device and other communication devices can be performed based on a clear transmission mechanism.

### For the request frame:

FIG. 15 shows a flowchart of a negotiation method for data transmission according to an exemplary embodiment of the present disclosure. The method is performed by the second device, and the aforementioned operation 320 includes the following sub operation 321.

At block 321, the second device receives a request frame.

In some embodiments, the request frame is used for requesting to negotiate whether the out-of-order transmission is used. Optionally, the request frame is used for requesting to negotiate that the out-of-order transmission is used. Optionally, the request frame is used for requesting to negotiate that the out-of-order transmission is not used. Optionally, the request frame is used for requesting to negotiate that the out-of-order transmission is used for a data unit corresponding to a TID with a value of m, where the value of m is an integer. Optionally, the request frame is used to request negotiation that the out-of-order transmission is not used for the data unit corresponding to a TID with a value of n, where the value of n is an integer. In some embodiments, the request frame is further used for requesting to negotiate the out-of-order processing mode and the out-of-order processing parameter in a case where the out-of-order transmission is allowed.

Specifically, details of the implementation of the request frame may be reference to the foregoing operation 221.

### For the response frame:

FIG. 16 shows a flowchart of a negotiation method for data transmission according to an exemplary embodiment of the present disclosure. The method is performed by the second device, and the aforementioned operation 320 further includes the following sub operation 322.

At block 322, the second device sends a response frame.

In some embodiments, the response frame is used for responding to whether the out-of-order transmission is used. Optionally, the response frame is used for responding that the out-of-order transmission is used. Optionally, the request frame is used for responding that the out-of-order transmission is not used. Optionally, the response frame is used for responding that the out-of-order transmission is used for a data unit corresponding to a TID with a value of m, where the value of m is an integer. Optionally, the response frame is used for responding that the out-of-order transmission is not used for a data unit corresponding to a TID with a value of n, where the value of n is an integer. In some embodiments, the response frame is further used for responding to whether the out-of-order processing mode and the out-of-order processing parameter are used in a case where the out-of-order transmission is allowed.

Specifically, details of the implementation of the response frame may be reference to the foregoing operation 222.

### For the demolition frame:

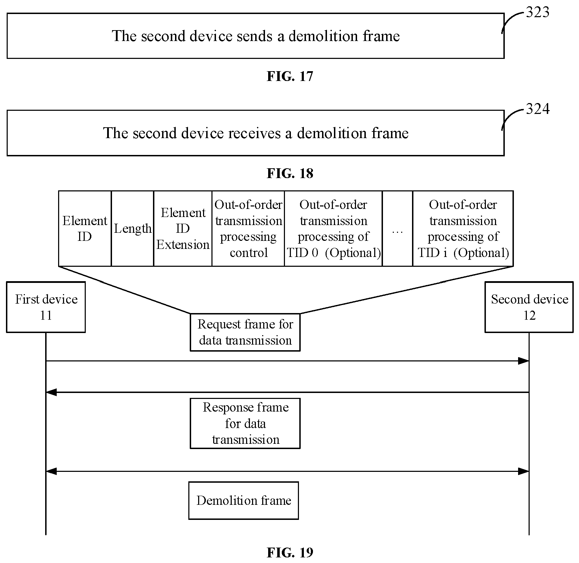

FIG. 17 shows a flowchart of a negotiation method for data transmission according to an exemplary embodiment of the present disclosure. The method is performed by the second device, and the aforementioned operation 320 further includes the following sub operation 323.

At block 323, the second device sends a demolition frame.

Specifically, details of the implementation of the demolition frame may be reference to the foregoing operation 223.

FIG. 18 shows a flowchart of a negotiation method for data transmission according to an exemplary embodiment of the present disclosure. The method is performed by the second device, and the aforementioned operation 320 further includes the following sub operation 323.

At block 324, the second device receives a demolition frame.

Specifically, details of the implementation of the demolition frame may be reference to the foregoing operation 223.

The in-order/out-of-order transmission negotiation mechanism for data units allows a non-Multi-Link Operation (MLO) non-AP station and a non-MLO AP to determine, when one of the non-MLO non-AP station and the non-MLO AP acts as the sender and the other acts as the receiver of the data unit(s) or data frame(s), whether the out-of-order transmission is allowed by the data frame and/or management frame corresponding to the i-th TID in the uplink direction and/or downlink direction, and the out-of-order processing mode and the out-of-order processing parameter in the case where the out-of-order transmission is allowed. Herein, for the data unit(s) or data frame(s) sent in the uplink direction, the non-MLO non-AP station is the data sender, and the non-MLO AP is the data receiver. For the data frame sent in the downlink direction, the non-MLO AP is the data sender, and the non-MLO non-AP station is the data receiver.

By default, in the uplink direction and/or downlink direction, the data frames and/or management frames corresponding to all TIDs may only perform the in-order transmission (or the out-of-order transmission is not allowed). In a non-default situation, the data frame and/or management frame corresponding to the i-th TID may determine, through the in-order/out-of-order transmission negotiation of data units, whether the out-of-order transmission is allowed in the uplink direction and/or the downlink direction, as well as the out-of-order processing mode and the out-of-order processing parameter in the case where the out-of-order transmission is allowed.

In-order/out-of-order transmission negotiation of the associated or re-associated data unit:

Exemplarily, as shown in FIG. 19, the first device 11 as the sender device that requests to negotiate whether the out-of-order transmission is used, and the second device 12 as the receiver device that receives the data negotiation request may be taken as an example for illustration.

The first device 11 sends a data transmission request frame to the second device 12, and the data transmission request frame is used for requesting to negotiate with the second device 12 whether the out-of-order transmission is used. Specifically, the details of the implementation of the data transmission request frame may be reference to the foregoing operation 221.

The second device 12 receives the data transmission request frame sent by the first device 11.

The second device 12 sends a data transmission response frame to the first device 11. The data transmission response frame is used for responding to whether to agree to the request from the first device 11. Specifically, the details of the implementation of the data transmission response frame may be reference to the foregoing operation 222.

Optionally, after the negotiation between the first device 11 and the second device 12 is completed, the first device 11 and/or the second device 12 may initiate data transmission demolition. For example, the first device 11 sends the demolition frame to the second device 12, and/or, the second device 12 sends the demolition frame to the first device 11. The demolition frame is used for demolishing the data transmission mode used for the negotiated data unit. Specifically, details of the implementation of the demolition frame may be reference to the foregoing operation 223.

### In-order/out-of-order transmission negotiation of data units during association or re-association:

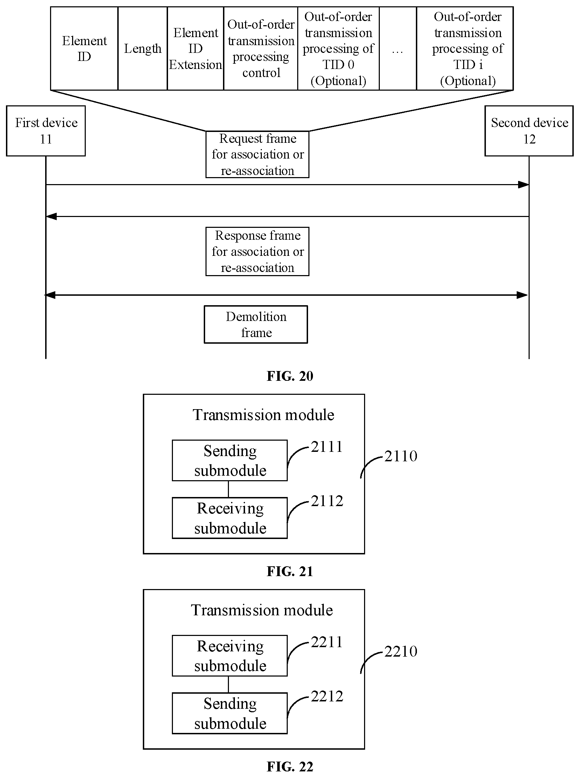

Exemplarily, as shown in FIG. 20, the first device 11 as the sender device that requests to negotiate whether the out-of-order transmission is used, and the second device 12 as the receiver device that receives the data negotiation request may be taken as an example for illustration.

The first device 11 sends an association or re-association request frame to the second device 12, and the association or re-association request frame is used for not only requesting to negotiate with the second device 12 whether the out-of-order transmission is used, but also for requesting the first device 11 to associate or re-associate with the second device 12. Specifically, the details of the implementation of the association or re-association request frame for requesting to negotiate with the second device 12 on whether the out-of-order transmission is used may be reference to the foregoing operation 221.

The second device 12 receives the association or re-association request frame sent by the first device 11.

The second device 12 sends an association or re-association response frame to the first device 11. The association or re-association response frame is used for responding to whether to agree to the request from the first device 11, including whether to agree that the out-of-order transmission is used and whether to agree to associate or re-associate with the first device 11. Specifically, the details of the implementation of the association or re-association response frame for responding to whether the out-of-order transmission is used may be reference to the foregoing operation 222.

Optionally, after the negotiation between the first device 11 and the second device 12 is completed, the first device 11 and/or the second device 12 may initiate data transmission demolition. For example, the first device 11 sends the demolition frame to the second device 12, and/or, the second device 12 sends the demolition frame to the first device 11. The demolition frame is used for demolishing the data transmission mode used for the negotiated data unit. Specifically, details of the implementation of the demolition frame may be reference to the foregoing operation 223.

In some embodiments, after the data transmission negotiation between the first device and the second device is completed, the first device and the second device may perform the data transmission according to the negotiation result.

For the case where data units are not distinguished :

### Data sender:

Data units are not marked to distinguish between transmission urgency or low time latency. For the situation where the data receiver is the STA, an SN counter or SN sequence is assigned according to the < MLD MAC address attached to the STA identified by address 1, TID i >; and for the situation where the data receiver is the MLD, the counter is indexed by the < MLD MAC address attached to the STA identified by address 1, TID i >. For the situation where the data receiver is the STA, a PN counter or PN sequence is assigned according to < TA, RA, TID i or priority corresponding to TID i >; and for the situation where the data receiver is the MLD, the counter is associated with < MLD MAC address attached to the STA identified by TA, MLD MAC address attached to the STA identified by RA, TID i or priority corresponding to TID i >.

### Data receiver:

The reordering buffer is assigned and/or controlled according to < TA, TID i >. At the data receiver, a reception of the reordering buffer corresponding to each < TA, TID i > is assigned and controlled, and the reception of the reordering buffer is responsible for reordering the data unit corresponding to the TA and the TID with the value of i. At the same time, it is also responsible for identifying and discarding the repeated frames, that is, identifying and discarding the frames with the same serial number. Furthermore, for the received data unit, even if there is the preceding unreceived data unit whose serial number is lower than the serial number of the received data unit, the data unit with the specific traffic identification or marker is delivered to the next MAC process (or to the upper layer), in a case where the difference between the serial number of the received data unit that is to be transmitted and the serial number of the unreceived data unit is less than or equal to the SN deviation threshold is satisfied.

A replay counter is assigned according to < TA, RA, TID i or priority corresponding to TID i > and replay detection is performed. For a given receiver, only one replay counter is used for the data unit corresponding to TID i; while for the situation where the receiver is the MLD, the replay counter is associated with < MLD MAC address attached to the STA identified by TA, MLD MAC address attached to the STA identified by RA, TID i or priority corresponding to TID i >.

Additionally, by using the replay detection based on a PN window, the replay detection may be performed on the data unit. If the PN of the received data unit matches the recorded entry corresponding to the current PN window, the data unit passes through the replay detection; and at the same time, the PN window is updated. If the PN of the received data unit does not match the recorded entry corresponding to the current PN window, the data unit is discarded.

For the case where data units are distinguished:

### Data sender:

By marking the different service flows or different transmission time latency requirements or transmission urgency corresponding to the i-th TID, the data units with different service flows or different transmission time latency requirements are distinguished. The SN counter or SN sequence is assigned according to the < MLD MAC address attached to the STA identified by address 1, TID i, traffic identifier or data unit marker >. For a given receiver, the data unit corresponding to the TID i uses a SN space and multiple counters. Herein, the counter is indexed by < MLD MAC address attached to the STA identified by address 1, TID i, traffic identifier or data unit marker >. The PN counter or PN sequence is assigned according to < MLD MAC address attached to the STA identified by TA, MLD MAC address attached to the STA identified by RA, TID i or priority corresponding to TID i, traffic identifier or data unit marker >. For a given receiver, the data unit corresponding to TID i uses a PN space and multiple counters. Herein, the counter is associated with < MLD MAC address attached to the STA identified by TA, MLD MAC address attached to the STA identified by RA, TID i or priority corresponding to TID i, traffic identifier or data unit marker >.

### Data receiver:

The reordering buffer is assigned and/or controlled according to < MLD MAC address attached to the STA identified by TA, TID i, traffic identifier or data unit marker >. At the data receiver, a reception of the reordering buffer corresponding to each < MLD MAC address attached to the STA identified by TA, TID i, traffic identifier or data unit marker > is assigned and controlled, and each reception of the reordering buffer is responsible for reordering the data unit corresponding to each < MLD MAC address attached to the STA identified by TA, TID i, traffic identifier or data unit marker >. At the same time, it is also responsible for identifying and discarding the repeated frames, that is, identifying and discarding the frames with the same serial number.

A replay counter is assigned according to < TA, RA, TID i or priority corresponding to TID i, traffic identifier or data unit marker >, and replay detection is performed. For a given recipient, the data unit corresponding to TID i uses multiple replay counters, where the replay counters are associated with < MLD MAC address attached to the STA identified by TA, MLD MAC address attached to the STA identified by RA, TID i or priority corresponding to TID i, traffic identifier or data unit marker >.

Additionally, by using the replay detection based on a PN replay counter, the replay detection may be performed on the data unit. If the PN of the received data unit is greater than the value of the replay counter which corresponds to the data unit and is associated with the < MLD MAC address attached to the STA identified by TA, MLD MAC address attached to the STA identified by RA, TID i or priority corresponding to TID i, traffic identifier or data unit marker >, the data unit passes through the replay detection.

It should be noted that the aforementioned out-of-order transmission may be understood literally as the transmission of the data units is out-of-order. It may also be that there is a difference between the time sequence in which the data sender sends the data unit in the MAC SAP and the time sequence in which the data receiver receives the data unit in the MAC SAP. For example, if the data sender sequentially sends the first data unit and the second data unit in the MAC SAP, and the data receiver sequentially receives the second data unit and the first data unit in the MAC SAP. Since the data receiver firstly receives the second data unit with the subsequent sending order and then receives the first data unit with the preceding sending order, the transmission of the first data unit and the second data unit can also be regarded as the out-of-order transmission.

It should be noted that the aforementioned data unit includes an individually addressed QoS data unit. The data unit may be at least one of the following: a data frame, a data packet, QoS data, MPDU, MSDU, A-MSDU, A-MSDU, or MMPDU.

FIG. 21 shows a structural block diagram of a negotiation apparatus for data transmission according to an exemplary embodiment of the present disclosure. The apparatus includes a transmission module 2110.

The transmission module 2110 is configured to transmit at least one frame.

Optionally, the at least one frame includes at least one of the following:
- a request frame;
- a response frame; or
- a demolition frame.

In some embodiments, at least one request frame is transmitted, and the request frame is used for requesting to negotiate whether the out-of-order transmission is used.

In some embodiments, at least one response frame is transmitted, and the response frame is used for responding to whether the out-of-order transmission is used.

In some embodiments, at least one demolition frame is transmitted, and the demolition frame is used for demolishing a data transmission mode used for the negotiated data unit.

In some embodiments, at least one request frame and at least one response frame are transmitted.

In some embodiments, at least one request frame and at least one demolition frame are transmitted.

In some embodiments, at least one response frame and at least one demolition frame are transmitted.

In some embodiments, at least one request frame, at least one response frame, and at least one demolition frame are transmitted.

In some embodiments, the at least one frame is further used for negotiating an out-of-order processing mode and an out-of-order processing parameter in a case where the out-of-order transmission is allowed. Optionally, the request frame is further used for requesting to negotiate the out-of-order processing mode and the out-of-order processing parameter in a case where the out-of-order transmission is allowed. Optionally, the response frame is further used for responding to whether the out-of-order processing mode and the out-of-order processing parameter are used in a case where the out-of-order transmission is allowed.

In some embodiments, the out-of-order processing mode and the out-of-order processing parameter include at least one of the following information:
- transmission direction;
- allowance of one of the out-of-order transmission and in-order transmission;
- whether the out-of-order transmission is allowed to be used for a data unit corresponding to at least one traffic identifier (TID);
- a serial number (SN) processing and reordering mode of a data unit corresponding to at least one TID;
- a packet number (PN) processing and replay detection mode of a data unit corresponding to at least one TID;
- the number of SN spaces and/or the number of first counters used for a data unit corresponding to at least one TID;
- the maximum number of SN spaces allowed to be used for a data unit corresponding to at least one TID;
- the maximum number of first counters allowed to be used for a data unit corresponding to at least one TID;
- whether the out-of-order transmission is allowed by a data unit corresponding to at least one TID that uses a SN space and/or a first counter;
- a condition parameter for delivering a data unit corresponding to at least one TID that is received to an upper layer;
- the allowable maximum deviation between a serial number of a data unit corresponding to at least one TID that is received and a serial number of a data unit corresponding to at least one TID that is unreceived;
- the longest waiting time of a data unit corresponding to at least one TID that is received in a buffer;
- the number of PN spaces and/or the number of second counters used for a data unit corresponding to at least one TID;
- the maximum number of PN spaces that are allowed to be used for a data unit corresponding to at least one TID;
- the maximum number of second counters that are allowed to be used for a data unit corresponding to at least one TID;
- whether a PN window is used for replay detection on a data unit corresponding to at least one TID; or,
- a size of a PN window that is used for replay detection on a data unit corresponding to at least one TID.

Herein, the data unit corresponding to at least one TID includes the data unit corresponding to one TID and/or the data unit corresponding to each TID of at least two TIDs.

In some embodiments, the aforementioned transmission module 2110 includes a sending submodule 2111.

The sending submodule 2111 is configured to send the request frame.

In some embodiments, the request frame is used for requesting to negotiate whether the out-of-order transmission is used. Optionally, the request frame is used for requesting to negotiate that the out-of-order transmission is used. Optionally, the request frame is used for requesting to negotiate that the out-of-order transmission is not used. Optionally, the request frame is used for requesting to negotiate that the out-of-order transmission is used for a data unit corresponding to a TID with a value of m, where the value of m is an integer. Optionally, the request frame is used for requesting to negotiate that the out-of-order transmission is not used for a data unit corresponding to a TID with a value of n, where the value of n is an integer.

Specifically, the details of the implementation of the request frame may be reference to the foregoing operation 221.

In some embodiments, the transmission module 2110 further includes a receiving submodule 2112.

The receiving submodule 2112 is configured to receive a response frame.

In some embodiments, the response frame is used for responding to whether the out-of-order transmission is used. Optionally, the response frame is used for responding that the out-of-order transmission is used. Optionally, the request frame is used for responding that the out-of-order transmission is not used. Optionally, the response frame is used for responding that the out-of-order transmission is used for a data unit corresponding to a TID with a value of m, where the value of m is an integer. Optionally, the response frame is used for responding that the out-of-order transmission is not used for a data unit corresponding to a TID with a value of n, where the value of n is an integer.

Specifically, the details of the implementation of the response frame may be reference to the foregoing operation 222.

The sending submodule 2111 is further configured to send a demolition frame.

The receiving submodule 2112 is further configured to receive the demolition frame.

Specifically, the details of the implementation of the demolition frame may be reference to the foregoing operation 223.

FIG. 22 shows a structural block diagram of a negotiation apparatus for data transmission according to an exemplary embodiment of the present disclosure. The apparatus includes a transmission module 2210.

The transmission module 2210 is configured to transmit at least one frame.

Optionally, the at least one frame includes at least one of the following:
- a request frame;
- a response frame; or
- a demolition frame.

In some embodiments, at least one request frame is transmitted, and the request frame is used for requesting to negotiate whether the out-of-order transmission is used.

In some embodiments, at least one response frame is transmitted, and the response frame is used for responding to whether the out-of-order transmission is used.

In some embodiments, at least one demolition frame is transmitted, and the demolition frame is used for demolishing a data transmission mode used for the negotiated data unit.

In some embodiments, at least one request frame and at least one response frame are transmitted.

In some embodiments, at least one request frame and at least one demolition frame are transmitted.

In some embodiments, at least one response frame and at least one demolition frame are transmitted.

In some embodiments, at least one request frame, at least one response frame, and at least one demolition frame are transmitted.

In some embodiments, the at least one frame is further used for negotiating an out-of-order processing mode and an out-of-order processing parameter in a case where the out-of-order transmission is allowed. Optionally, the request frame is further used for requesting to negotiate the out-of-order processing mode and the out-of-order processing parameter in a case where the out-of-order transmission is allowed. Optionally, the response frame is further used for responding to whether the out-of-order processing mode and the out-of-order processing parameter are used in a case where the out-of-order transmission is allowed.

In some embodiments, the out-of-order processing mode and the out-of-order processing parameter include at least one of the following information:
- transmission direction;
- allowance of one of the out-of-order transmission and in-order transmission;
- whether the out-of-order transmission is allowed to be used for a data unit corresponding to at least one traffic identifier (TID);
- a serial number (SN) processing and reordering mode of a data unit corresponding to at least one TID;
- a packet number (PN) processing and replay detection mode of a data unit corresponding to at least one TID;
- the number of SN spaces and/or the number of first counters used for a data unit corresponding to at least one TID;
- the maximum number of SN spaces allowed to be used for a data unit corresponding to at least one TID;
- the maximum number of first counters allowed to be used for a data unit corresponding to at least one TID;
- whether the out-of-order transmission is allowed by a data unit corresponding to at least one TID that uses a SN space and/or a first counter;
- a condition parameter for delivering a data unit corresponding to at least one TID that is received to an upper layer;
- the allowable maximum deviation between a serial number of a data unit corresponding to at least one TID that is received and a serial number of a data unit corresponding to at least one TID that is unreceived;
- the longest waiting time of a data unit corresponding to at least one TID that is received in a buffer;
- the number of PN spaces and/or the number of second counters used for a data unit corresponding to at least one TID;
- the maximum number of PN spaces that are allowed to be used for a data unit corresponding to at least one TID;
- the maximum number of second counters that are allowed to be used for a data unit corresponding to at least one TID;
- whether a PN window is used for replay detection on a data unit corresponding to at least one TID; or,
- a size of a PN window that is used for replay detection on a data unit corresponding to at least one TID.

Herein, the data unit corresponding to at least one TID includes the data unit corresponding to one TID and/or the data unit corresponding to each TID of at least two TIDs.

In some embodiments, the aforementioned transmission module 2210 includes a receiving submodule 2211.

The receiving submodule 2211 is configured to receive the request frame.

In some embodiments, the request frame is used for requesting to negotiate whether the out-of-order transmission is used, and/or, for requesting to negotiate the out-of-order processing mode and the out-of-order processing parameter in a case where the out-of-order transmission is used. Optionally, the request frame is used for requesting to negotiate that the out-of-order transmission is used. Optionally, the request frame is used for requesting to negotiate that the out-of-order transmission is not used. Optionally, the request frame is used for requesting to negotiate that the out-of-order transmission is used for a data unit corresponding to a TID with a value of m, where the value of m is an integer. Optionally, the request frame is used for requesting to negotiate that the out-of-order transmission is not used for a data unit corresponding to a TID with a value of n, where the value of n is an integer.

Specifically, the details of the implementation of the request frame may be reference to the foregoing operation 222.

In some embodiments, the transmission module 2210 further includes a sending submodule 2212.

The sending submodule 2212 is configured to send the response frame.

In some embodiments, the response frame is used for responding to whether the out-of-order transmission is used. Optionally, the response frame is used for responding that the out-of-order transmission is used. Optionally, the request frame is used for responding that the out-of-order transmission is not used. Optionally, the response frame is used for responding that the out-of-order transmission is used for a data unit corresponding to a TID with a value of m, where the value of m is an integer. Optionally, the response frame is used for responding that the out-of-order transmission is not used for a data unit corresponding to a TID with a value of n, where the value of n is an integer.

Specifically, the details of the implementation of the implementation of the response frame may be reference to the foregoing operation 222.

The sending submodule 2211 is further configured to send a demolition frame.

The receiving submodule 2212 is further configured to receive the demolition frame.

Specifically, the details of the implementation of the demolition frame may be reference to the aforementioned operation 223.

It should be noted that when the apparatus according to the foregoing embodiments realizes its functions, only the division of each functional module described above is illustrated as an example. In practical applications, the functions described above can be allocated by different functional modules according to actual needs, that is, the content structure of the apparatus can be divided into different functional modules to complete all or part of the functions described above.

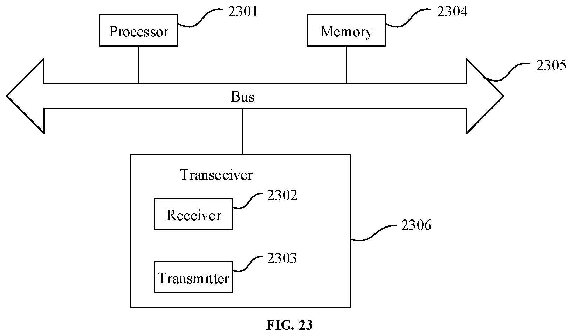

FIG. 23 shows a schematic structural diagram of a communication device according to an embodiment of the present disclosure. The communication device may include a processor 2301, a receiver 2302, a transmitter 2303, a memory 2304, and a bus 2305.

The processor 2301 includes one or more processing cores, and the processor 2301 executes various functional applications and information processing by running software programs and modules.

The receiver 2302 and the transmitter 2303 may be implemented as a transceiver 2306, and the transceiver 2306 may be a communication chip.

The memory 2304 is connected to the processor 2301 via the bus 2305. The memory 2304 may be used to store a computer program, and the processor 2301 is used to execute the computer program to implement various operations performed by the Ambient IoT device or the terminal device or the network device in the aforementioned method embodiments.

Furthermore, the memory 2304 may be implemented by any type of volatile or non-volatile storage device, including, but not limited to, a Random Access Memory (RAM), a Read-Only Memory (ROM), an Erasable Programmable Read-Only Memory (EPROM), Electrically Erasable Programmable Read-Only Memory (EEPROM), flash memory or other solid state storage technology thereof, a Compact Disc Read-Only Memory (CD-ROM), a Digital Video Disc (DVD) or other optical storage, magnetic cassettes, magnetic tape, magnetic disk storage or other magnetic storage devices, or a combination thereof.

An embodiment of the present disclosure further provides a computer-readable storage medium, and a computer program is stored thereon. The computer program is used to be executed by a processor of an Ambient IoT device or a terminal device or a network device to implement each operation of the aforementioned negotiation method for data transmission. In some embodiments, the computer-readable storage medium may include a Read-Only Memory (ROM), a Random-Access Memory (RAM), a Solid State Drive (SSD), an optical disc, or the like. The random access memory may include a Resistance Random Access Memory (ReRAM) and a Dynamic Random Access Memory (DRAM).

An embodiment of the present disclosure further provides a chip. The chip includes a programmable logic circuit and/or program instructions, and when the chip runs on a terminal device or a network device, the chip is configured to implement each operation of the aforementioned negotiation method for data transmission.

An embodiment of the present disclosure further provides a computer program product or a computer program. The computer program product or the computer program includes computer instructions stored in a computer-readable storage medium, and a processor of a terminal device or a network device can read and execute the computer instructions from the computer-readable storage medium to implement each operation of the aforementioned negotiation method for data transmission.

Those skilled in the art should understand that, in one or more of the examples described above, the functions described in the embodiments of the present disclosure may be implemented in hardware, software, firmware, or any combination thereof. When implemented by using software, such functions may be stored in a computer readable medium or served as one or more instructions or code on the computer readable medium for transmission. The computer readable medium includes a computer readable medium and a communication medium. The communication medium includes any medium that facilitates delivery of a computer program from one place to another. The storage medium may be any available medium accessible by a general-purpose or special-purpose computer.

The foregoing descriptions are merely exemplary embodiments of the present disclosure, and are not intended to limit the present disclosure. Any modification, equivalent substitution, improvement, etc. made within the spirit and principles of the present disclosure shall fall within the scope of protection of the present disclosure.

## Claims

1. A negotiation method for data transmission, comprising:
transmitting at least one frame, the at least one frame being used for negotiating whether out-of-order transmission is used.

2. The method of claim 1, wherein the at least one frame is further used for negotiating an out-of-order processing mode and an out-of-order processing parameter in a case where the out-of-order transmission is allowed.

3. The method of claim 2, wherein transmitting the at least one frame comprises:
sending a request frame, and receiving a response frame; or,
receiving a request frame, and sending a response frame;
wherein the request frame is used for requesting to negotiate whether the out-of-order transmission is used, and the response frame is used for responding whether the out-of-order transmission is used.

4. The method of claim 3, wherein the request frame is further used for requesting to negotiate the out-of-order processing mode and the out-of-order processing parameter in the case where the out-of-order transmission is allowed;
wherein the response frame is further used for responding to whether the out-of-order processing mode and the out-of-order processing parameter are used in the case where the out-of-order transmission is allowed.

5. The method of any one of claims 2 to 4, wherein the out-of-order processing mode and the out-of-order processing parameter comprise at least one of the following information:
transmission direction;
allowance of one of the out-of-order transmission and in-order transmission;
whether the out-of-order transmission is allowed to be used for a data unit corresponding to at least one traffic identifier (TID);
a serial number (SN) processing and reordering mode of a data unit corresponding to at least one TID;
a packet number (PN) processing and replay detection mode of a data unit corresponding to at least one TID;
a number of SN spaces and/or a number of first counters used for a data unit corresponding to at least one TID;
a maximum number of SN spaces allowed to be used for a data unit corresponding to at least one TID;
a maximum number of first counters allowed to be used for a data unit corresponding to at least one TID;
whether the out-of-order transmission is allowed by a data unit corresponding to at least one TID that uses a SN space and/or a first counter;
a condition parameter for delivering a data unit corresponding to at least one TID that is received to an upper layer;
an allowable maximum deviation between a serial number of a data unit corresponding to at least one TID that is received and a serial number of a data unit corresponding to at least one TID that is unreceived;
a longest waiting time of a data unit corresponding to at least one TID that is received in a buffer;
a number of PN spaces and/or a number of second counters used for a data unit corresponding to at least one TID;
a maximum number of PN spaces that are allowed to be used for a data unit corresponding to at least one TID;
a maximum number of second counters that are allowed to be used for a data unit corresponding to at least one TID;
whether a PN window is used for replay detection on a data unit corresponding to at least one TID; or,
a size of a PN window that is used for replay detection on a data unit corresponding to at least one TID.

6. The method of claim 3 or 4, wherein the request frame comprises:
a first field, used for requesting whether the out-of-order transmission is allowed by a data unit corresponding to at least one TID in at least one transmission direction, and/or, the out-of-order processing mode and the out-of-order processing parameter in the case where the out-of-order transmission is allowed.

7. The method of claim 6, wherein the first field comprises at least one of the following:
a first subfield, used for indicating a transmission direction, the transmission direction comprising an uplink direction and/or a downlink direction; or
a second subfield, used for indicating whether the out-of-order transmission is allowed, or, indicating that one of the out-of-order transmission and in-order transmission is allowed.

8. The method of claim 7, wherein in a case where the second subfield indicates that the out-of-order transmission is allowed, the first field further comprises:
a third subfield, used for indicating, in a bitmap manner, whether there is a second field in the request frame, the second field being used for indicating an out-of-order processing mode of a data unit corresponding to a TID with a value of i;
wherein the value of i is an integer.

9. The method of claim 8, wherein the second field comprises at least one of the following:
a fourth subfield, used for indicating whether the out-of-order transmission is allowed to be used for the data unit corresponding to the TID with the value of i;
a fifth subfield, used for indicating whether a sixth subfield is comprised;
the sixth subfield, used for indicating an SN processing and reordering mode of the data unit corresponding to the TID with the value of i;
a seventh subfield, used for indicating whether an eighth subfield is comprised; or,
the eighth subfield, used for indicating a PN processing and replay detection mode of the data unit corresponding to the TID with the value of i.

10. The method of claim 9, wherein in a case where the fifth subfield indicates that the sixth subfield is comprised in the second field, the sixth subfield comprises at least one of the following:
a first processing mode subfield, used for indicating a number of SN spaces and/or a number of first counters used for the data unit corresponding to the TID with the value of i, the first counter being a counter for counting SNs to obtain an SN sequence;
a subfield for an allowable maximum number of SN spaces, used for indicating a maximum number of SN spaces that are allowed to be used for the data unit corresponding to the TID with the value of i;
a subfield for an allowable maximum number of counters, used for indicating a maximum number of first counters that are allowed to be used for the data unit corresponding to the TID with the value of i;
a subfield for whether the out-of-order transmission is allowed by an SN sequence, used for indicating whether the out-of-order transmission is allowed by the data unit corresponding to the TID with the value of i that uses a SN space and/or a first counter;
a subfield for a condition parameter for delivery to an upper layer, used for indicating the condition parameter used to deliver a received data unit to the upper layer.

11. The method of claim 10, wherein the subfield for the condition parameter for delivery to the upper layer comprises at least one of the following:
a subfield for whether there is an SN deviation threshold, used for indicating whether an SN deviation threshold subfield is comprised in the subfield for the condition parameter for delivery to the upper layer;
the SN deviation threshold subfield, used for indicating an allowable maximum deviation between a first serial number and a second serial number, the first serial number being a serial number of the received data unit, and the second serial number being a serial number of an unreceived data unit;
a subfield for whether there is a buffer waiting time threshold, used for indicating whether a buffer waiting time threshold subfield is comprised in the subfield for the condition parameter for delivery to the upper layer; or,
the buffer waiting time threshold subfield, used for indicating a maximum waiting time of the received data unit in a buffer.

12. The method of claim 9, wherein in a case where the seventh subfield indicates that the eighth subfield is comprised in the second field, the eighth subfield comprises at least one of the following:
a second processing mode subfield, used for indicating a number of PN spaces and/or a number of second counters used for the data unit corresponding to the TID with the value of i, the second counter being a counter for counting PNs to obtain a PN sequence;
a subfield for whether a PN window is used for replay detection, used for indicating whether the PN window is used for the replay detection on the data unit corresponding to the TID with the value of i;
a subfield for an allowable maximum number of PN spaces, used for indicating a maximum number of PN spaces that are allowed to be used for the data unit corresponding to the TID with the value of i; or,
a subfield for allowable maximum number of counters, used for indicating a maximum number of second counters that are allowed to be used for the data unit corresponding to the TID with the value of i.

13. The method of claim 12, wherein in a case where the subfield for whether the PN window is used for replay detection indicates that the PN window is used for the replay detection on the data unit corresponding to the TID with the value of i, the eighth subfield further comprises:
a PN window size subfield, used for indicating a size of the PN window used for the replay detection on the data unit corresponding to the TID with the value of i.

14. The method of claim 3 or 4, wherein the response frame comprises:
a status code field, used for indicating whether a request corresponding to the request frame is accepted.

15. The method of claim 14, wherein a field value of the status code field comprises at least one of a first value, a second value, or a third value;
in a case where the field value of the status code field is the first value, the status code field is used for indicating that the request corresponding to the request frame is accepted;
in a case where the field value of the status code field is the second value, the status code field is used for indicating that the request corresponding to the request frame is rejected;
in a case where the field value of the status code field is the third value, the status code field is used for indicating that the request corresponding to the request frame is rejected, and suggesting negotiation for whether the out-of-order transmission is used in at least one transmission direction, and/or, an out-of-order processing mode and an out-of-order processing parameter of the data unit corresponding to at least one TID when the out-of-order transmission is allowed.

16. The method of claim 15, wherein in the case where the field value of the status code field is the third value, the response frame further comprises:
a third field, used for indicating whether the out-of-order transmission is allowed by the data unit corresponding to the at least one TID in the at least one transmission direction, and/or, the out-of-order processing mode and the out-of-order processing parameter when the out-of-order transmission is allowed.

17. The method of any one of claims 2 to 16, further comprising:
in a case where the response frame indicates that the request corresponding to the request frame is accepted, performing the data transmission according to an out-of-order transmission mode requested by the request frame; or,
in a case where the response frame indicates that the request corresponding to the request frame is rejected, performing the data transmission according to a transmission mode used before the request frame is sent.

18. The method of any one of claims 2 to 17, wherein the request frame comprises a first data unit transmission element, and the first data unit transmission element is used for indicating a transmission mode parameter corresponding to the request frame;
wherein the response frame comprises a second data unit transmission element, in a case where the response frame indicates that a request corresponding to the request frame is rejected as well as suggests negotiation for whether the out-of-order transmission is used in at least one transmission direction, and/or, an out-of-order processing mode and an out-of-order processing parameter of a data unit corresponding to at least one TID when the out-of-order transmission is allowed; and the second data unit transmission element is used for indicating a suggested transmission mode parameter;
wherein the transmission mode parameter comprises: whether the out-of-order transmission is allowed in the at least one transmission direction, and/or, the out-of-order processing mode and the out-of-order processing parameter when the out-of-order transmission is allowed.

19. The method of any one of claims 2 to 18, wherein in a case where a first device has been associated or re-associated with a second device, the request frame is a request frame for data transmission, and the response frame is a response frame for data transmission.

20. The method of claim 19, wherein the request frame and the response frame are action frames.

21. The method of claim 20, wherein the first device is a multi-link device that serves as an access point, and the second device is a multi-link device that serves as a non-access point; or,
the first device is a multi-link device that serves as a non-access point, and the second device is a multi-link device that serves as an access point.

22. The method of claim 19, wherein during a process in which the first device is associated or re-associated with the second device, the request frame is a request frame for association or re-association, and the response frame is a response frame for association or re-association.

23. The method of any one of claims 2 to 22, wherein transmitting the at least one frame further comprises:
sending a demolition frame; or receiving a demolition frame;
wherein the demolition frame is used for demolishing a data transmission mode used for a negotiated data unit.

24. The method of any one of claims 2 to 23, wherein the data unit comprises an individually addressed quality of service (QoS) data unit.

25. A negotiation apparatus for data transmission, comprising:
a transmission module, configured to transmit at least one frame, the at least one frame being used for negotiating whether out-of-order transmission is used.

26. A communication device, comprising:
a processor;
a transceiver coupled to the processor;
a memory for storing executable instructions of the processor;
wherein the processor is configured to load and execute the executable instructions to implement the negotiation method for data transmission of any one of claims 1 to 24.

27. A computer-readable storage medium, storing a computer program thereon, wherein the computer program is loaded and executed by a processor to implement the negotiation method for data transmission of any one of claims 1 to 24.

28. A computer program product, comprising computer instructions, wherein the computer instructions are stored in a computer-readable storage medium, a processor acquires the computer instructions from the computer-readable storage medium, and the processor is enabled to load and execute to implement the negotiation method for data transmission of any one of claims 1 to 24.
